# EUROPÄISCHE PATENTSCHRIFT

(11) **EP 3 098 568 B1**
(45) Veröffentlichungstag und Bekanntmachung des Hinweises auf die Patenterteilung: **25.09.2019**
(21) Anmeldenummer: 16164866.2
(22) Anmeldetag: 12.04.2016
(51) Int. Cl.: G01C 21/36, G06F 16/29

(54) **VORRICHTUNG ZUM ZUORDNEN EINES NAVIGATIONSZIELS ZU EINER EINE MEHRZAHL VON ZEICHENGRUPPEN UMFASSENDEN ZEICHENABFOLGE, VERFAHREN UND COMPUTERPROGRAMM**
DEVICE FOR ASSIGNING A NAVIGATION TARGET TO A SEQUENCE OF CHARACTERS COMPRISING A PLURALITY OF CHARACTER GROUPS, METHOD AND COMPUTER PROGRAM
DISPOSITIF D'ATTRIBUTION D'UNE DESTINATION DE NAVIGATION A UNE PLURALITE DE SERIES DE CARACTERES COMPRENANT DES GROUPES DE CARACTERES, PROCEDE ET PROGRAMME D'ORDINATEUR

(30) Priorität: 06.05.2015 DE 102015208365
(43) Veröffentlichungstag der Anmeldung: 30.11.2016
(60) Teilanmeldung: 17150030.9
(73) Patentinhaber: Volkswagen Aktiengesellschaft, 38440 Wolfsburg (DE)
(72) Erfinder: Gross, Benjamin, 38104 Braunschweig (DE); Winter, Christian, 38118 Braunschweig (DE)

(56) Entgegenhaltungen:
- EP-A1- 2 306 333
- DE-A1-102007 003 115
- DE-A1-102013 209 168

## Beschreibung

Die vorliegenden Ausführungsbeispiele liegen auf dem Gebiet der Vorrichtungen zum Zuordnen eines Navigationsziels zu einer eine Mehrzahl von Zeichengruppen umfassenden Zeichenabfolge.

Im Bereich der computergestützten Kartographie werden viele verschiedene Arten von Geräten oder für solche entwickelte Computerprogrammen verwendet, die auf unterschiedliche Weise funktionieren können. Beispielsweise umfassen konventionelle Lösungen Programme, die eine Eingabe eines Benutzers einer eindeutigen geographischen Position zuordnen, oder zumindest einer Auswahl möglicher Positionen liefern können. Hierbei kann es jedoch erforderlich sein, dass die Eingabe des Benutzers von vornherein eindeutig ist, oder zumindest aufgrund eines zuvor gespeicherten Parameters eingegrenzt werden kann. Sofern eine Routenbestimmung seitens des Benutzers zu dieser Position gewünscht ist, können diese Lösungen dabei möglicherweise nicht in der Lage sein, eine Navigation zu einem Ziel durchzuführen, oder dabei Benutzererfordernisse bezüglich einer Routenwahl nur unzureichend berücksichtigen. Andere Lösungen können zwar eine Navigation zu der Position durchführen, setzen dabei aber möglicherweise eine vollständige, eindeutige oder in einem vorgegebenen Format erfolgende Eingabe eines Navigationsziels voraus, welche einen erhöhten Zeit- oder Konzentrationsaufwand für den Benutzer mit sich bringen kann. Dies kann beispielsweise bei Navigation in einem Fahrzeug hinderlich sein, da ein Fahrer des Fahrzeugs z. B. bei verstärktem Verkehrsaufkommen unter Umständen nicht ausreichend Zeit oder Konzentration für eine Zieleingabe erübrigen kann. Auch außerhalb der Navigation in einem Fahrzeug können die genannten Probleme ggf. eine Bedienung des Programms unnötig verkomplizieren.

Druckschrift DE 10 2013 209 168 A1 schlägt ein Verfahren zum Betreiben eines Navigationssystems, bei dem Daten in zwei verschiedenen Datenbanken geordnet sind, vor.

In der Druckschrift DE 10 2007 003 115 A1 wird ein Verfahren zur Eingabe eines Zielortes vorgeschlagen, bei dem Namen von Zieldeskriptoren unterschiedlicher Kategorien eingegeben werden können.

Druckschrift EP 2 306 333 A1 schlägt ein Verfahren zum Prüfen von Aktualisierungen angeforderter Daten vor, das bei der Suche von Punkten von Interesse in einer oder mehreren Datenbanken verwendet werden kann.

Mithin ist es wünschenswert, ein Konzept zum Zuordnen eines Navigationsziels zu einer von einem Benutzer eingegebenen Zeichenabfolge zu verbessern.

Diesem Bedarf tragen eine Vorrichtung, ein Verfahren und ein Computerprogramm mit den Merkmalen der unabhängigen Patentansprüche Rechnung.

Gemäß einem ersten Aspekt beziehen sich Ausführungsbeispiele auf eine Vorrichtung zum Zuordnen eines Navigationsziels zu einer eine Mehrzahl von Zeichengruppen umfassenden Zeichenabfolge. Die Vorrichtung umfasst ein Zuordnungsmodul, welches dazu ausgebildet ist, für eine Interpretation der Zeichenabfolge eine Zuordnung zumindest einer Zeichengruppe zu einer ersten Informationskategorie aus einer Mehrzahl von Informationskategorien vorzunehmen. Die Vorrichtung umfasst zudem ein Speichermodul, welches dazu ausgebildet ist, für eine Mehrzahl von Navigationszielen jeweils eine Mehrzahl von einem Navigationsziel eindeutig zugeordneten Merkmalen unterschiedlicher Informationskategorien bereitzustellen. Die Vorrichtung umfasst weiterhin ein Auswahlmodul, welches dazu ausgebildet ist, ein Navigationsziel aus der Mehrzahl von Navigationszielen auszuwählen, wenn die Zeichengruppe einem dem einen Navigationszielzugeordneten Merkmal der ersten Informationskategorie entspricht. Das Zuordnungsmodul ist ferner dazu ausgebildet, bei dem einen Navigationszieleine Zuordnung weiterer Zeichengruppen aus der Zeichenabfolge zu einer zweiten Informationskategorien nur vorzunehmen, wenn für die zweite Informationskategorie dem einen Navigationsziel ein der jeweiligen Zeichengruppe entsprechendes Merkmal zugeordnet ist. Nur wenn das Auswahlmodul kein Navigationsziel aus der Mehrzahl von Navigationszielen auswählen kann, weil die Zeichengruppe keinem Merkmal der erste Informationskategorie eindeutig entspricht, ist das Zuordnungsmodul ferner dazu ausgebildet, eine Zuordnung einer weiteren Zeichengruppe zu der zweiten Informationskategorie nur vorzunehmen, wenn die weitere Zeichengruppe einem Merkmal entspricht, welches für die zweite Informationskategorie in dem Speichermodul gespeichert ist und innerhalb einer vordefinierten Umgebung der Vorrichtung liegt. Hierdurch kann es möglich sein, bei einem Ermitteln des Navigationsziels zuerst eine Einschränkung auf ein Ziel vorzunehmen, sodass eine weitere Suche ggf. schneller erfolgen kann. Dies kann möglicherweise zu einer Zeitersparnis und einer Einsparung von Rechenkapazität führen, und so einen Bedienkomfort für einen Benutzer erhöhen. Dies kann es weiterhin erlauben, falls kein Navigationsziel vorab eindeutig ermittelt werden kann, oder widersprüchliche Angaben auftreten, eine Umkreissuche nach möglichen Zielen durchzuführen, in denen das Navigationsziel potentiell liegt.

Gemäß einem weiteren Aspekt beziehen sich Ausführungsbeispiele auf ein Verfahren zum Zuordnen eines Navigationsziels zu einer eine Mehrzahl von Zeichengruppen umfassenden Zeichenabfolge. Das Verfahren umfasst ein Vornehmen einer Zuordnung zumindest einer Zeichengruppe zu einer ersten Informationskategorie aus einer Mehrzahl von Informationskategorien für eine Interpretation der Zeichenabfolge. Das Verfahren umfasst zudem ein Bereitstellen jeweils einer Mehrzahl von einem Navigationsziel eindeutig zugeordneten Merkmalen unterschiedlicher Informationskategorien für eine Mehrzahl von Navigationszielen. Das Verfahren umfasst außerdem ein Auswählen eines Navigationsziels aus der Mehrzahl von Navigationszielen, wenn die Zeichengruppe einem dem einen Navigationszielzugeordneten Merkmal der ersten Informationskategorie entspricht. Das Verfahren umfasst weiterhin ein Vornehmen einer Zuordnung weiterer Zeichengruppen aus der Zeichenabfolge zu einer zweiten Informationskategorie bei dem einen Navigationsziel, nur wenn für die zweite Informationskategorie dem einen Navigationsziel ein der jeweiligen Zeichengruppe entsprechendes Merkmal zugeordnet ist. Nur wenn kein Navigationsziel aus der Mehrzahl von Navigationszielen ausgewählt werden kann, weil die Zeichengruppe keinem Merkmal der erste Informationskategorie eindeutig entspricht, umfasst das Verfahren ein Vornehmen einer Zuordnung einer weiteren Zeichengruppe zu der zweiten Informationskategorie, wenn die weitere Zeichengruppe einem Merkmal entspricht, welches für die zweite Informationskategorie gespeichert ist und innerhalb einer vordefinierten Umgebung der Vorrichtung liegt. Dies kann eine Suche nach einem Navigationsziel erheblich abkürzen, da zunächst ein Ziel unter Umständen eingegrenzt werden kann, auf die die weitere Suche im Anschluss einschränkbar ist. Somit kann ein schnelleres Bereitstellen von Suchergebnissen an den Benutzer möglich werden.

Darüber hinaus schaffen weitere Ausführungsbeispiele auch ein Programm oder Computerprogramm mit einem Programmcode zum Durchführen eines der genannten Verfahren, wenn der Programmcode auf einem Computer, einem Prozessor oder einer programmierbaren Hardwarekomponente, wie z.B. einer applikationsspezifischen integrierten Schaltung (ASIC), ausgeführt wird.

Nachfolgend werden unter Bezugnahme auf die beigefügten Figuren einige exemplarische Ausführungsbeispiele näher beschrieben und erläutert. Es zeigen im Einzelnen:
- Fig. 1: ein Blockdiagramm einer Vorrichtung zum Zuordnen eines Navigationsziels zu einer Zeichenabfolge gemäß einem einfachen Ausführungsbeispiel;
- Fig. 2: ein Blockdiagramm einer Architektur eines Programms zum Durchführen eines Verfahrens zum Zuordnen eines Navigationsziels zu einer Zeichenabfolge gemäß einem Ausführungsbeispiel;
- Fig. 3: ein Blockdiagramm mit logischen Operationsschritten für ein Zuordnungsmodul gemäß einem detaillierten Ausführungsbeispiel;
- Fig. 4: ein Blockdiagramm einer Vorrichtung zum Zuordnen eines Navigationsziels zu einer Zeichenabfolge gemäß einem detaillierten Ausführungsbeispiel; und
- Fig. 5: ein Ablaufdiagramm eines Verfahrens zum Zuordnen eines Navigationsziels zu einer Zeichenabfolge gemäß einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die in dem durch die Ansprüche definierten Bereich der Erfindung liegen, abdecken sollen. Gleiche Bezugszeichen bezeichnen in der gesamten Figurenbeschreibung gleiche oder ähnliche Elemente.

Durch Ausführungsbeispiele kann es ermöglicht werden, eine Zeichenabfolge, z. B. als einzeilige Adresseingabe einzugeben, und eine auf einer Datenbank gespeicherte Stadt, Straße, Adresse oder Kreuzung als Ausgabe zu erhalten. Konventionelle Verfahren oder Vorrichtungen, die sich hiermit befassen, können oftmals lediglich weniger robuste, intuitive oder für einen Benutzer weniger nützliche Lösungen liefern.

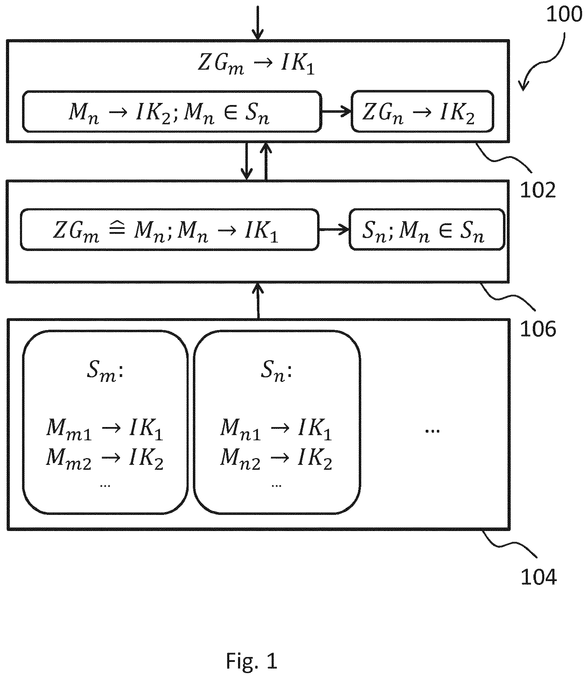

Fig. 1 zeigt ein Blockdiagramm einer Vorrichtung 100 zum Zuordnen eines Navigationsziels zu einer eine Mehrzahl von Zeichengruppen umfassenden Zeichenabfolge. Im Einzelnen werden in den Fign. 1, 3 und 4 folgende Abkürzungen verwendet:
ZA: Zeichenabfolge
ZGₘ: Zeichengruppe
ZGₙ: Weitere Zeichengruppe
ZG₁: Führende Zeichengruppe einer Zeichenabfolge
ZG_{N}: Letzte Zeichengruppe einer Zeichenabfolge
Z: Zeichen einer Zeichengruppe
IK₁: Erste Informationskategorie
IK₂: Zweite Informationskategorie
T₁: Erste Teilmenge von Informationskategorien
T₂: Zweite Teilmenge von Informationskategorien
Sₘ, Sₙ: Stadt
Mₘ, Mₘ₁, Mₘ₂, Mₙ, Mₙ₁, Mₙ₂: Einer Stadt eindeutig zugeordnete Merkmale
G: Eingegrenztes Gebiet
M_{G}: Merkmal für eine Informationskategorie innerhalb eines eingegrenzten Gebietes
W: Wahrscheinlichkeitswert
GW, GW₁, GW₂: Gesamtwahrscheinlichkeitswert
IN, IN₁, IN₂: Interpretation der Zeichenabfolge als Navigationsziel

Die Vorrichtung 100 umfasst ein Zuordnungsmodul 102, welches dazu ausgebildet ist, für eine Interpretation der Zeichenabfolge eine Zuordnung zumindest einer Zeichengruppe zu einer ersten Informationskategorie aus einer Mehrzahl von Informationskategorien vorzunehmen. Die Vorrichtung 100 umfasst zudem ein Speichermodul 104, welches dazu ausgebildet ist, für eine Mehrzahl von Städten jeweils eine Mehrzahl von einer Stadt eindeutig zugeordneten Merkmalen unterschiedlicher Informationskategorien bereitzustellen. Die Vorrichtung 100 umfasst weiterhin ein Auswahlmodul 106, welches dazu ausgebildet ist, eine selektierte Stadt aus der Mehrzahl von Städten auszuwählen, wenn die Zeichengruppe einem der selektierten Stadt zugeordneten Merkmal der ersten Informationskategorie entspricht. Das Zuordnungsmodul 102 ist ferner dazu ausgebildet, bei einer selektierten Stadt eine Zuordnung weiterer Zeichengruppen aus der Zeichenabfolge zu der zweiten Informationskategorie nur vorzunehmen, wenn für die zweite Informationskategorie der Stadt ein der jeweiligen Zeichengruppe entsprechendes Merkmal zugeordnet ist.

Die Zeichenabfolge umfasst dabei wenigstens eine Zeichengruppe. Die Zeichengruppe umfasst wenigstens ein Zeichen. Das Zuordnungsmodul 102 kann ausgebildet sein, um die Zeichenabfolge in mehrere Zeichengruppen einzuteilen, oder sogar die Zeichengruppen voneinander abzugrenzen. Hierfür können zunächst mehrere Möglichkeiten untersucht werden, beispielsweise eine Einteilung einer Zeichenabfolge "abcde" in die Zeichengruppen "ab" und "cde", oder in die Zeichengruppen "abcd" und "e". Die Informationskategorie kann beispielsweise ein Straßenname oder Stadtname, eine Abkürzung einer geographischen Bezeichnung, eine Hausnummer, eine Postleitzahl oder auch ein Verhältniswort wie beispielsweise "und" oder "in" sein. Einige Informationskategorien können demnach auf eine Stadt hinweisen, die dann durch das Auswahlmodul 106 selektiert werden kann. Die selektierte Stadt kann gemäß einer der möglichen Interpretationen der Zeichenabfolge das Navigationsziel umfassen. Die Bedingung, dass die Stadt ein der jeweiligen Zeichengruppe entsprechendes Merkmal aufweist, kann sich beispielsweise auf ein Land, in dem die Stadt liegt, oder eine Straße, die durch die Stadt verläuft, als Merkmal beziehen. Anders ausgedrückt kann es so möglich sein, dass zuerst eine Zeichengruppe der Zeichenabfolge als Stadt interpretiert wird, und daraufhin weitere Zeichengruppen der Zeichenabfolge mit Bezug zu der Stadt interpretiert werden. Das Zuordnungsmodul 102, Speichermodul 104 und Auswahlmodul 106 können z. B. durch ein Datenbussystem (beispielsweise CAN-Bus in einem Fahrzeug) verbunden sein, oder auch von einer gemeinsamen Hardwarekomponente, beispielsweise einem Prozessor, umfasst sein. Das Speichermodul 104 kann eine Tabelle mit mehreren einander zugeordneten Einträgen, oder anders ausgedrückt, eine Datenbank, umfassen. Zwar sind einige Ausführungsbeispiele hierin im Zusammenhang mit einer Vorrichtung 100 beschrieben, jedoch können diese auch im Zusammenhang mit einem Verfahren oder einem Computerprogramm zum Ausführen des Verfahrens implementiert werden.

Das Zuordnungsmodul 102 ist dazu ausgebildet, eine Zuordnung der weiteren Zeichengruppe zu der zweiten Informationskategorie vorzunehmen. Außerdem ist das Auswahlmodul 106 dazu ausgebildet, ohne selektierte Stadt eine Zuordnung einer weiteren Zeichengruppe zu der zweiten Informationskategorie vorzunehmen, wenn die weitere Zeichengruppe einem gespeicherten Merkmal entspricht, welches für eine Informationskategorie innerhalb eines eingegrenzten Gebietes gespeichert ist. Innerhalb des Gebietes kann es so ermöglicht werden, eine oder mehrere Städte auszuwählen. Dies kann wünschenswert sein, wenn sich eine Stadt aufgrund der möglichen Zeichengruppen der Zeichenabfolge nicht oder nicht eindeutig ermitteln lässt, oder auch, wenn widersprüchliche Interpretationen möglich sind. Dabei kann der Parameter z. B. eine aktuelle Position des Benutzers oder einen Umkreisradius um diese Position umfassen. Der Umkreisradius kann einer werks- oder benutzerseitigen Voreinstellung entsprechen, und/oder sukzessive erweitert werden. Widersprüchliche Eingaben, z. B. eine Postleitzahl und ein Stadtname, die einander nicht entsprechen, können beispielsweise derart interpretiert werden, dass zunächst eine von beiden Informationskategorien als Stadt interpretiert, und daraufhin eine Umkreissuche um die ermittelte Stadt durchgeführt wird. Dabei kann aufgrund der Postleitzahl ein gültiges Ziel in diesem Postleitzahlenbereich, aber außerhalb der Stadt ermittelt werden.

Es werden nun Konzepte zu einer Interpretation einer Zeichenabfolge (eines Eingabestrings) und resultierende Datenbankanfragen zur performanten Auflösung auf eine Stadt, Straße, Adresse oder Kreuzung näher beschrieben. Durch Implementierung einiger Ausführungsbeispiele kann eine einzeilige Zieleingabe im Kontext einer Fahrzeugnavigation realisiert werden. Der Benutzer kann z. B. hintereinander alle Bestandteile einer anzufahrenden Adresse (Stadt, Straße, Hausnummern, etc.) in einer Zeichenkette eingeben. Konventionelle Systeme, die in Fahrzeugen verbaut sind und für die Adresseingabe möglicherweise keine Verbindung zu einem Server aufbauen können, können dabei auf eine hierarchische Eingabe angewiesen sein. Für den Benutzer kann es hierbei erforderlich sein, nacheinander Land, Staat, Stadt, Straße und Hausnummer anzugeben. Dies kann umständlich und unintuitiv sein, weswegen eine einzeilige Zieleingabe wünschenswert sein kann. Eine Auswertung einer solchen kann jedoch mit herkömmlichen Methoden eine Untersuchung zu großer Datenmengen erfordern, z.B. wenn der Benutzer nur eine Hausnummer oder Hausnummer und Straße angibt. Durch Ausführungsbeispiele kann möglicherweise ein verbesserter Kompromiss aus verkürzter Zieleingabe und reduzierter zu untersuchender Datenmenge bewirkt werden.

Manche Ausführungsbeispiele umfassen mehrere Teilaspekte. Ein erster Teilaspekt kann eine Datenbank oder Datenbanktabelle (hier auch City Index genannt) zum Auffinden von Städten sein, die eine performante Suche nach Städten, auch in der Umgebung um eine Position (z.B. der Position eines Fahrzeugs des Benutzers) erlauben kann. Die Datenbank kann einer Stadt eindeutig zugeordnete Merkmale unterschiedlicher Informationskategorien umfassen, und auf dem Speichermodul 106 hinterlegt sein. Ein zweiter Teilaspekt kann eine Zeichengruppenanalyse (auch als Token-Entity-Analyse bezeichnet) sein, die eine eingegebene Zeichenabfolge interpretieren und ermitteln kann, welche Anteile z.B. Städte, Straßen oder Hausnummern sind. Diese Zeichengruppenanalyse kann durch das Zuordnungsmodul 102 vorgenommen werden. Ein dritter Teilaspekt kann eine Suchstrategie sein, die die Ergebnisse der Zeichengruppenanalyse in Aufrufe an die Datenbank und ggf. an eine vorhandene weitere Navigationsdatenbank umsetzt.

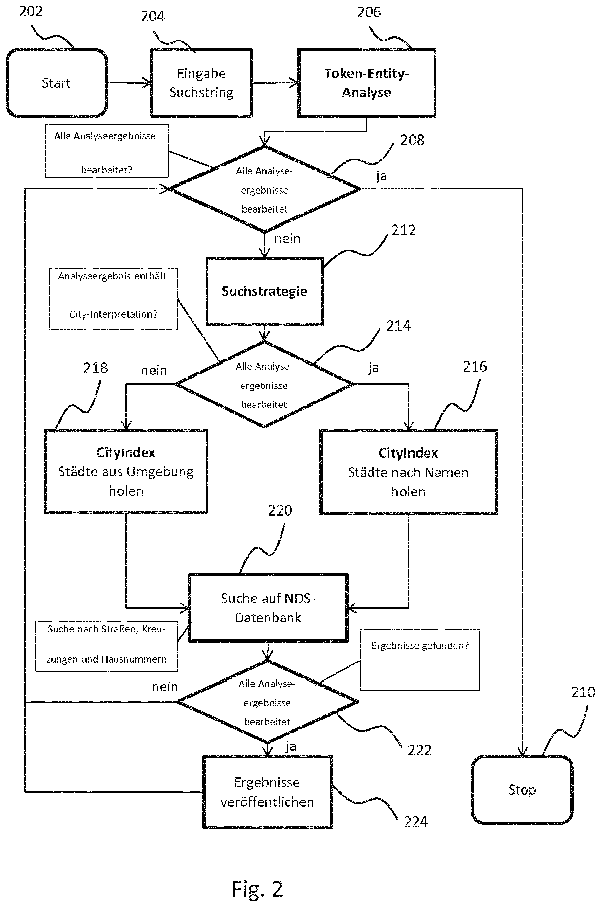

Diese Teilaspekte werden in ihrem Zusammenspiel mit weiteren optionalen Aspekten in Fig. 2 verdeutlicht und im Detail erläutert. Fig. 2 zeigt ein Blockdiagramm einer Architektur eines Programms zum Durchführen eines Verfahrens zum Zuordnen eines Navigationsziels zu einer Zeichenabfolge gemäß einem Ausführungsbeispiel. Das Programm kann beispielsweise mittels der beschriebenen Vorrichtung ausgeführt werden, oder mittels einer programmierbaren Hardwarekomponente, welche die Vorrichtung umfasst. Es erfolgt zunächst ein Programmstart 202 mit einer Eingabe 204 Abfolge durch den Benutzer. Es wird nun eine Analyse 206 der Zeichengruppen der Zeichenabfolge vorgenommen, woraufhin bei einem ersten Kontrollschritt 208 überprüft wird, ob alle Analyseergebnisse bearbeitet wurden. Ist dies der Fall, kann ein Beenden des Programms 210 erfolgen. Ist dies nicht der Fall, kann eine Suchstrategie 212 initialisiert werden. Bei einem zweiten Kontrollschritt 214 kann überprüft werden, ob das Analyseergebnis eine Interpretation einer Zeichengruppe als Stadt umfasst, oder anders ausgedrückt, ob die Zeichengruppe einer Informationskategorie zugeordnet ist, welche eindeutig auf eine Stadt hinweist. Ist eine solche Interpretation vorhanden, kann ein Abruf 216 von Städten aus der Datenbank entsprechend einem Stadtnamen vorgenommen werden. Ist eine solche Interpretation nicht vorhanden, kann ein weiterer Abruf 218 von Städten aus der Datenbank, die z. B. auf dem Speichermodul 104 (vgl. Fig. 1) hinterlegt ist, vorgenommen werden, welche in einer vordefinierten Umgebung der Benutzerposition liegen. Der Abruf 216 und der weiterer Abruf 218 kann durch das Auswahlmodul 106 (vgl. Fig. 1) ausgeführt werden, und der Ermittlung wenigstens einer Stadt dienen. Eine weitere Suche kann somit auf die wenigstens eine Stadt eingegrenzt werden.

Die weitere Suche 220 kann beispielsweise auf einer Navigations-Datenstandard- (NDS)-Datenbank durchgeführt werden, und eine Suche nach Straßen, Kreuzungen oder Hausnummern umfassen. Sind alle Analyseergebnisse bearbeitet, kann ein dritter Kontrollschritt 222 erfolgen, um zu ermitteln, ob Ergebnisse gefunden wurden. Sind keine Ergebnisse gefunden worden, kann das Programm zu dem ersten Kontrollschritt 208 zurückkehren, und entweder die Suchstrategie 212 nochmals initialisieren, oder das Beenden 210 erzwingen. Sind Ergebnisse gefunden worden, kann eine Veröffentlichung 224 der Ergebnisse erfolgen. Danach kann wiederum der erste Kontrollschritt 208 ausgeführt werden, um zu ermitteln, ob alle Analyseergebnisse bearbeitet wurden.

Bei einigen Ausführungsbeispielen können Datenbanken eingesetzt werden, die auf dem Standard NDS 2.3.2 basieren. Suchen nach Straßen, Kreuzungen und Hausnummern können somit unter Umständen auf herkömmliche Art und Weise erfolgen. Bei der Suche nach Städten und Stadtteilen kann gemäß Ausführungsbeispielen eine Datenbanktabelle verwendet werden, die alle Städte der jeweiligen Datenbank enthält. Diese Tabelle wird auch als City Index bezeichnet, und kann auf SQLite 3.8.5 und der darin verwendeten Technologie FTS (Free Text Search, Freie Textsuche) basieren, die unter Umständen eine hochperformante Suche nach Zeichenabfolgen oder Zeichengruppen mit Platzhaltern in einer Datenbank ermöglichen kann.

Die Datenbank kann die Datenbanktabelle (City Index) aufweisen, welche gemäß der folgenden Darstellung aufgebaut sein kann, bei der INTEGER einen ganzzahligen Zahlenwert, und TEXT eine alphanummerische Zeichenkombination bezeichnet:

| | |
|---|---|
| NameObjektID | INTEGER |
| MortonCode | INTEGER |
| AktualisierungsregionID | INTEGER |
| KriteriumA | TEXT |
| KriteriumB | TEXT |
| KriteriumC | TEXT |
| KriteriumD | TEXT |
| KriteriumE | TEXT |
| KriteriumF | TEXT |
| KriteriumG | TEXT |
| KriteriumH | TEXT |
| KriteriumI | TEXT |
| KriteriumJ | TEXT |
| SuchKennzeichnung | TEXT |
| AusnahmeKennzeichnung | TEXT |
| PrioritätsIndex | INTEGER |
| SprachID | INTEGER |

Die Struktur der Tabelle kann dabei auf einem FTS-Block des NDS-2.3.2-Standards basieren, um möglichst nah am Standard zu bleiben. Die Inhalte können dabei wenigstens teilweise neu definiert werden. Dabei gilt gemäß einem Ausführungsbeispiel:
NameObjektlD ist eine ID, mit der sich eine Stadt innerhalb einer Aktualisierungsregion eindeutig identifizieren lässt. Sie kann die performante Eingrenzung von Straßensuchen auf eine spezifische Stadt erlauben.

MortonCode enthält die Position der Stadt (Stadtmitte), kodiert als Z-Werte einer Z-Kurve im Auflösungsgrad (Level of Detail) 13. Der Auflösungsgrad 1 kann hierbei eine gesamte Karte umfassen, der Auflösungsgrad 2 einen Kartenausschnitt mit beispielsweise der halben Kantenlänge des Auflösungsgrades 1, der Auflösungsgrad 3 einen Kartenausschnitt mit beispielsweise der halben Kantenlänge des Auflösungsgrades 2, usw.

AktualisierungsregionID enthält die ID einer Aktualisierungsregion, in der sich die Stadt befindet. Die Karte ist zur besseren Behandlung von Aktualisierungsvorgängen in Regionen, die sogenannten Aktualisierungsregionen (Update Regions), unterteilt. Zusammen mit der NameObjektID kann so eine eindeutige Identifikation einer Stadt auf der gesamten Karte möglich sein.

KriteriumA enthält das Land, in dem die Stadt sich befindet, als Kürzel (z.B. "USA" oder "MEX"). Es kann eine performante Eingrenzung von Suchen auf Länder erlauben. KriteriumB enthält den Namen der Stadt. Es kann eine performante Suche von Städten nach Namen erlauben. KriteriumD enthält die Postleitzahlen der Stadt, mit Kommata separiert. Es kann eine performante Suche von Städten nach Postleitzahlen erlauben. KriteriumG enthält den Staat, in dem die Stadt sich befindet, als Kürzel (z.B. "CA" oder "NY"). Es kann eine performante Eingrenzung von Suchen auf Staaten erlauben. KriteriumJ enthält die Kachel, in der sich die Stadt befindet, kodiert als Z-Werte einer Z-Kurve im "Level of Detail" 9. Dabei werden die Z-Werte als hexadezimal kodierter String in der Datenbank abgelegt. Es erlaubt die performante Suche von Städten in der Umgebung um eine Position, da aus Position und Radius der Umgebung die beteiligten Kacheln mit einer einfachen Formel errechnet werden können.

SuchKennzeichnung enthält den Namen der Stadt, zu der ein Stadtteil gehört, für den Fall, dass der Datensatz einen Stadtteil enthält. Enthält er eine Stadt, kann SuchKennzeichnung leer bleiben.

PrioritätsIndex gibt an, ob es sich bei dem Eintrag um eine Stadt oder einen Stadtteil handelt. Dabei markiert beispielsweise der Wert "1" eine Stadt und der Wert "0" einen Stadtteil. Zusammen mit dem Wert SuchKennzeichnung lassen sich so auch ggf. Städte und Stadtteile unterscheiden und sowohl mit Suchen auf der Basis des Namens der Stadt als auch auf der Basis des Namens des Stadtteils ermitteln.

SprachlD enthält die ID der Sprache, in der die Namen in dem Eintrag gehalten sind. "0" steht hierbei z. B. für die offizielle Sprache des Landes (engl. local official), in der die Stadt liegt. Eine Stadt kann mehrfach in der Tabelle vorkommen, jeweils mit in anderen Sprachen gehaltenen Namen und einer anderen SprachlD. So kann auch nach Exonymen in einer anderen Sprache als der offiziellen gesucht werden, z.B. weil eine andere Sprache als Systemsprache eingestellt ist.

Die Einträge KriteriumC, KriteriumE, KriteriumF, KriteriumH, Kriteriuml sowie AusnahmeKennzeichnung können bei manchen Ausführungsbeispielen leer bleiben.

Die nachfolgende Tabelle zeigt ein Beispiel einer Befüllung gemäß dem soeben beschriebenen Ausführungsbeispiel anhand von Hollywood und Los Angeles in Kalifornien, USA:

| | | |
|---|---|---|
| NameObjektID | 67290933 | 67487278 |
| MortonCode | 5099583232841739130 | 5099585979961998651 |
| AktualisierungsregionID | 0 | 0 |
| KriteriumA | USA | USA |
| KriteriumB | Hollywood | Los Angeles |
| KriteriumC | | |
| KriteriumD | 90004, 90027, 90028, 90038, 90046, 90068 | 90001, 90002, 90003, ... 93063 |
| KriteriumE | | |
| KriteriumF | | |
| KriteriumG | CA | CA |
| KriteriumH | | |
| KriteriumI | | |
| KriteriumJ | 2046C55 | 2046C55 |
| SuchKennzeichnung | Los Angeles | |
| AusnahmeKennzeichnung | | |
| PrioritätsIndex | 0 | 1 |
| SprachID | 0 | 0 |

Durch die Erweiterung einer NDS-2.3.2-Datenbank durch eine Datenbanktabelle gemäß einigen Ausführungsbeispielen lassen sich möglicherweise performant und mit reduziertem Aufwand Städte auf einer ganzen Karte suchen, je nach Bedarf eingegrenzt nach Stadtname, Stadtteilname, Postleitzahl, Staat, Land oder Sprache sowie in der Umgebung um eine Position herum. Um den Aufwand weiter gering zu halten, kann die Datenbanktabelle nicht nur in Aktualisierungsregionen aufgeteilt, sondern auch in einer gemeinsamen Tabelle für die gesamte Karte vorhanden sein.

Weitere Anfragen können gemäß manchen Ausführungsbeispielen eingegrenzt auf Städte an die Datenbank gerichtet werden, die aus der Datenbanktabelle berechnet wurden. So kann das Problem, dass die Tabellen, die Straßen enthalten, potentiell so groß sind, dass auf der Basis von herkömmlichen SQLite-Anfragen ohne FTS keine performante Suche nur auf der Basis des Straßennamens möglich ist, umgangen werden. Eine Eingrenzung der Straßensuche auf eine jeweilige Stadt (anhand der Parameter NameObjektlD und AktualisierungsregionID aus der Datenbanktabelle) kann unter Umständen einen erhöhten Leistungsvorteil erbringen, der eine für den Benutzer schnellere und einfachere Suche von Adressen auf einer in ihrer Leistung eingeschränkten Plattform wie einem Bordcomputer eines Fahrzeugs erlauben kann.

Die Zeichengruppenanalyse gemäß dem zuvor genannten zweiten Teilaspekt kann dazu dienen, eine einzeilige, eingegebene Zeichenabfolge zu analysieren und zu ermitteln, welche Bestandteile der Zeichenabfolge, oder anders ausgedrückt, welche Zeichengruppen vom Benutzer mit welcher Wahrscheinlichkeit als Hausnummer, Straße, Stadt, Postleitzahl, Land, Staat usw. gemeint sind. Die Suchstrategie kann dann die Ergebnisse dieser Analyse in Aufrufe an die Datenbanktabelle umsetzen und so zu der Benutzereingabe passende Ergebnisse ermitteln.

Ein Beispiel für eine Analyse der Benutzereingabe "500 CLIPPER DR" könnte z.B. "Hausnummer(500) Straße(CLIPPER) Straße(DR)" als ein erstes Analyseergebnis, "Hausnummer(500) Straße (CLIPPER) -Stadt(DR)" als ein zweites Analyseergebnis, und "-Straße (500) Straße (CLIPPER) -Stadt(DR)" als ein drittes Analyseergebnis liefern. Da "DR" als Abkürzung für "Drive" (engl. "Weg" oder "Straße") typischer Bestandteil eines Straßennamens in den USA ist, kann es bevorzugt als Straße interpretiert werden. "500" ist mit hoher Wahrscheinlichkeit eine Hausnummer, da Straßennamen mit 500 sehr selten sind und weil sie am Anfang der Zeichenabfolge steht, wo in den USA typischerweise Hausnummern eingegeben werden. Unwahrscheinlichere Interpretationen können entsprechend markiert (z. B. mit einem Minuszeichen, "-"), und die Liste der möglichen Interpretationen so sortiert werden, dass die wahrscheinlichsten Ergebnisse (die mit möglichst wenigen unwahrscheinlichen Interpretationen) bevorzugt werden. So kann die Suchstrategie im Vergleich zu konventionellen Lösungen schneller plausible Ergebnisse liefern, ohne unwahrscheinliche Interpretationen gänzlich zu ignorieren. Auch diese liefern Ergebnisse, die jedoch später geliefert werden.

Die jeweilige Implementierung einer Zeichengruppenanalyse kann von mehreren verschiedenen Faktoren abhängig sein, beispielsweise von der verwendeten Sprache, denn von ihr können z.B. typische Straßennamenbestandteile abhängen, und einer Kultur, in der ein Einsatz gewünscht ist, denn von ihr kann das Format abhängig sein, in dem eine Adresse typischerweise eingegeben wird. In den USA z.B. kann die Hausnummer vor der Straße, in Deutschland hingegen nach der Straße eingegeben werden.

Mittels der Zeichengruppenanalyse gemäß einigen Ausführungsbeispielen können die plausibelsten Interpretationen einer Zeichenabfolge zuerst bearbeitet, und so schneller sinnvolle Ergebnisse geliefert werden. Ein generischer Ansatz, der alle Interpretationsmöglichkeiten gleich behandelt, kann die Ergebnisse zwar auch liefern, jedoch kann es sein, dass die intendierte Interpretation erst später bearbeitet wird und demzufolge die Ergebnisse auch später ermittelt werden können. Dies kann aus Sicht des Benutzers möglicherweise zu spät sein.

Für die nordamerikanische Region kann gemäß einigen Ausführungsbeispielen ein Regelsatz definiert und implementiert werden, um eine Zeichengruppenanalyse umzusetzen Dieser wird im Folgenden genauer beschrieben. Die Regeln gehen bei einem Ausführungsbeispiel davon aus, dass Adressen im USA-typischen Stil mit vorangestellten Hausnummern eingegeben werden. Bei der Zeichengruppenanalyse kann bestimmt werden, wonach mit den Zeichengruppen einer Zeichenabfolge gesucht werden soll, welche Zeichengruppe eine Stadt oder eine Straße, etc. sein könnte. Dabei gibt es mehrere Informationskategorien, die einer Zeichengruppe zuordenbar sind.

Eine Informationskategorie "Land" kann bedeuten, dass es sich bei der Zeichengruppe möglicherweise um ein Land handelt. Eine Informationskategorie "Staat" kann bedeuten, dass es sich bei der Zeichengruppe möglicherweise um einen (Bundes-)Staat handelt. Eine Informationskategorie "Stadt" kann bedeuten, dass es sich bei der Zeichengruppe möglicherweise um eine Stadt handelt. Eine Informationskategorie "Straße" kann bedeuten, dass es sich bei der Zeichengruppe möglicherweise um eine Straße handelt. Eine Informationskategorie "Kreuzung" kann bedeuten, dass es sich bei der Zeichengruppe möglicherweise um eine Kreuzung handelt. Eine Informationskategorie "Hausnummer" kann bedeuten, dass es sich bei der Zeichengruppe möglicherweise um eine Hausnummer handelt. Eine Informationskategorie "Postleitzahl" kann bedeuten, dass es sich bei der Zeichengruppe möglicherweise um eine Postleitzahl handelt. Eine Informationskategorie "UND-Operator" kann bedeuten, dass es sich bei der Zeichengruppe um eine logische UND-Verknüpfung handelt. Eine Informationskategorie "IN-Operator" kann bedeuten, dass es sich bei der Zeichengruppe um eine Lokalpräposition wie z. B. das Wort "in" handelt. Eine Informationskategorie "NAHE-Operator" kann bedeuten, dass es sich bei der Zeichengruppe um eine Lokalpräposition wie z. B. das Wort "nahe" (engl. near) oder "bei" (engl. around) handelt. Eine Informationskategorie "INNENSTADT-Operator" kann bedeuten, dass es sich bei der Zeichengruppe um den Begriff "downtown" (dt.: Innenstadt) handelt.

Ein Ergebnis der Analyse der Zeichenabfolge "500 clipper dr belmont" könnte z. B. Hausnummer(500) Straße(clipper) Straße(dr) Stadt(belmont) lauten. Eine Analyse kann aber beliebig viele Ergebnisse liefern. Eine Kreuzung könnte man entsprechend mit "bettina ave and thurm ave" suchen, wobei eine erste mögliche Interpretation "Straße(bettina) Straße(ave) UND-Operator(and) Kreuzung(thurm) Kreuzung(ave)" lauten kann. Um spezifisch in einer Stadt suchen zu können, gibt es einen IN-Operator. "clipper dr in belmont" kann dann entsprechend als "Straße(clipper) Straße(dr) IN-Operator(in) Stadt(belmont)" interpretiert werden. Analog kann auch in der Nähe einer Stadt gesucht werden. "clipper dr near belmont" kann entsprechend als "Straße(clipper) Straße(dr) Nahe-Operator(near) Stadt(belmont)" interpretiert werden. Um explizit eine Stadt zu suchen, kann der INNENSTADT-Operator eingesetzt werden. "downtown los angeles" wird zu "INNENSTADT-Operator(downtown) Stadt(los) Stadt(angeles)".

Die Regel kann wenigstens drei Bereiche aufweisen. Diese Bereiche umfassen eine Möglichkeitsanalyse, eine Wahrscheinlichkeitsanalyse und eine Sortierung. Die Möglichkeitsanalyse kann dabei ermitteln, welche Kombination aus Zeichengruppen grundsätzlich möglich wäre. Diese kann bei der in Fig. 1 gezeigten Vorrichtung 100 mittels des Zuordnungsmoduls 102 erfolgen.

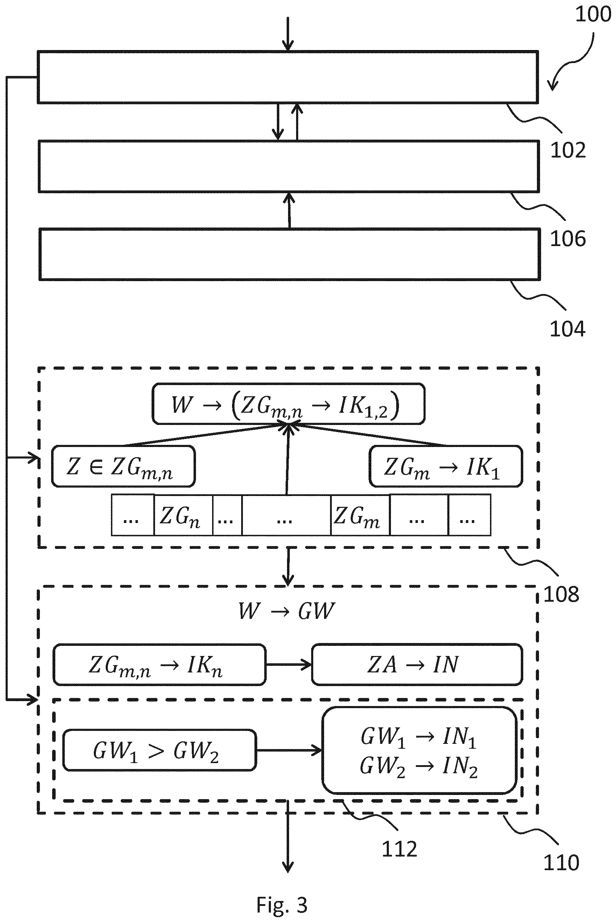

Fig. 3 zeigt eine Vorrichtung 100 gemäß einem detaillierten Ausführungsbeispiel. Komponenten, die eine Entsprechung in Fig. 1 aufweisen, sind hierin nicht nochmals erläutert, es wird vielmehr lediglich auf die Unterschiede eingegangen. Dabei gelten die bereits im Zusammenhang mit Fig. 1 verwendeten Abkürzungen. Weiterhin stellen gestrichelte Boxen optional vorhandene Komponenten dar.

Die Wahrscheinlichkeitsanalyse kann für die möglichen Zeichengruppenkombinationen unter Berücksichtigung des Inhalts die Wahrscheinlichkeit (oder 0, wenn unmöglich) bestimmen. Hierzu kann die Vorrichtung 100 ferner ein Überprüfungsmodul 108 umfassen, welches dazu ausgebildet ist, einen jeweiligen Wahrscheinlichkeitswert für eine Richtigkeit der Zuordnung der Zeichengruppe oder der weiteren Zeichengruppe zu der ersten oder zweiten Informationskategorie zu bestimmen. Dabei kann der Wahrscheinlichkeitswert beispielsweise ein Element aus einer höchstens drei Elemente umfassenden Wertemenge sein. Der Wahrscheinlichkeitswert bezieht sich dabei jeweils auf eine einzelne Zeichengruppe, und kann beispielsweise die Werte "wahrscheinlich" (oder engl. "complete match" für genaue Entsprechung), "unwahrscheinlich", und optional auch den Wert "unmöglich", oder alternativ entsprechende Zahlenwerte annehmen. Die Richtigkeit der Zuordnung kann aus Benutzersicht definiert sein, und einer Intention des Benutzers entsprechen. Das Bestimmen des Wahrscheinlichkeitswertes kann anhand eines logikbasierten Regelwerkes erfolgen.

Die Vorrichtung 100 kann bei einigen Ausführungsbeispielen ferner ein Evaluierungsmodul 110 umfassen, welches dazu ausgebildet ist, eine mögliche Interpretation der Zeichenabfolge als ein Navigationsziel unter Berücksichtigung der Zuordnung der Zeichengruppe zu der Informationskategorie zu bestimmen. Hierbei kann eine Gesamtheit aller Zeichengruppen der Zeichenabfolge berücksichtigt werden. Zudem können mehrere mögliche Interpretationen auftreten. Das Evaluierungsmodul 110 ist bei manchen Ausführungsbeispielen ferner dazu ausgebildet, unter Berücksichtigung des Wahrscheinlichkeitswertes für die Richtigkeit der Zuordnung wenigstens der Zeichengruppe zu der Informationskategorie einen Gesamtwahrscheinlichkeitswert für die mögliche Interpretation der Zeichenabfolge zu bestimmen. Der Gesamtwahrscheinlichkeitswert kann sich auch auf eine Richtigkeit einer Interpretation der gesamten Zeichenabfolge beziehen. Ferner umfasst das Evaluierungsmodul 110 bei einigen Ausführungsbeispielen ein Sortiermodul 112, welches dazu ausgebildet ist, eine erste mögliche Interpretation der Zeichenabfolge und eine zweite mögliche Interpretation der Zeichenabfolge in einer auf den Gesamtwahrscheinlichkeitswerten basierenden Reihenfolge bereitzustellen, oder anders ausgedrückt, zu sortieren. Die Sortierung kann die übrig bleibenden Zeichengruppenkombinationen priorisieren, die dann in der errechneten Reihenfolge von der Strategie durchprobiert werden können. Dabei kann beispielsweise der Gesamtwahrscheinlichkeitswert für eine mögliche Interpretation daraus berechnet werden, wie oft Zuordnungen von Zeichengruppen innerhalb der Zeichenabfolge von dem Evaluierungsmodul 110 mit "wahrscheinlich" bewertet wurde, oder wie oft Zuordnungen mit "unwahrscheinlich" bewertet wurden. Interpretationen, bei denen eine Zuordnung mit "unmöglich" bewertet wurde, können dabei optional verworfen werden. Überprüfungsmodul 108, Evaluierungsmodul 110 und Sortiermodul 112 können weiterhin als baulich getrennte, jedoch elektrisch verbundene Bauteile ausgebildet, aber auch von einer gemeinsamen Hardwarekomponente, z. B. Prozessor oder integrierte Schaltung, umfasst sein.

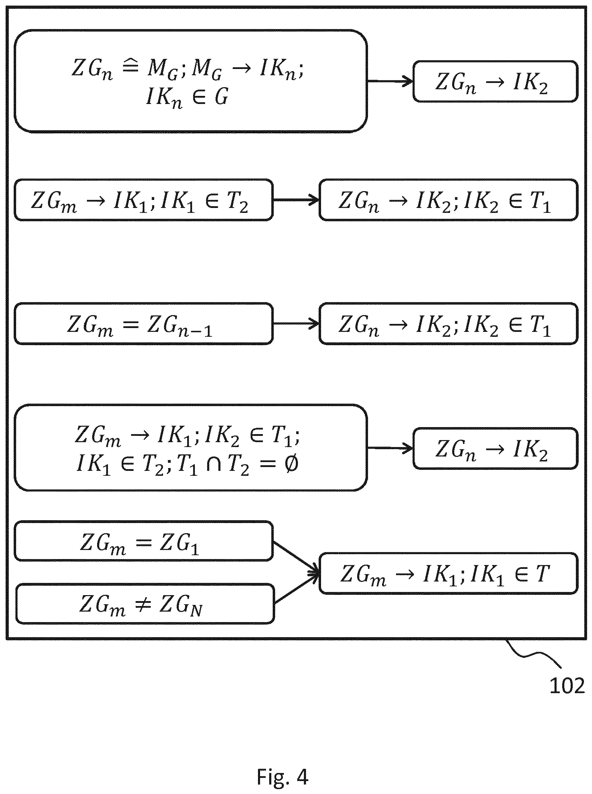

Im Rahmen der Möglichkeitsanalyse wird analysiert, welche Zuordnungen von Informationskategorien grundsätzlich möglich sind. Dabei kann ein Verhältnis der Informationskategorien zueinander berücksichtigt werden, möglicherweise aber noch nicht der Inhalt der Informationskategorie. Fig. 4 zeigt einen Überblick über einige beispielhafte logische Operationen, die gemäß vorgegebenen Regeln ablaufen können. Die Möglichkeitsanalyse kann derartige Regeln berücksichtigen, und durch das Zuordnungsmodul 102 ausführbar sein. Dabei ist bei einigen Ausführungsbeispielen das Zuordnungsmodul ferner dazu ausgebildet, der weiteren Zeichengruppe die zweite Informationskategorie aus einer ersten Teilmenge von Informationskategorien nur dann zuzuordnen, wenn der Zeichengruppe die erste Informationskategorie aus einer zweiten Teilmenge von Informationskategorien zugeordnet ist. Mit anderen Worten können bestimmte Informationskategorien nur in Kombination mit bestimmten anderen Informationskategorien auftreten, oder wenn die andere Informationskategorie bereits einer anderen Zeichengruppe der Zeichenabfolge zugeordnet ist.

Bei manchen Ausführungsbeispielen ist das Zuordnungsmodul 102 ferner dazu ausgebildet, der weiteren Zeichengruppe die zweite Informationskategorie aus der ersten Teilmenge von Informationskategorien nur dann zuzuordnen, wenn die Zeichengruppe der weiteren Zeichengruppe innerhalb der Zeichenabfolge unmittelbar vorangeht. Anders ausgedrückt können bestimmte Informationskategorien nur zugeordnet werden, wenn eine direkt vorangegangene Zeichengruppe einer bestimmten anderen Informationskategorie zugeordnet ist.

Bei manchen Ausführungsbeispielen ist das Zuordnungsmodul 102 ferner dazu ausgebildet, der weiteren Zeichengruppe die zweite Informationskategorie nur dann zuzuordnen, wenn eine die zweite Informationskategorie umfassende erste Teilmenge von Informationskategorien verschieden von einer zweiten Teilmenge, welche die der Zeichengruppe zugeordnete erste Informationskategorie umfasst, ist. Dies kann zum einen bedeuten, dass einige Informationskategorien das Fehlen einer bestimmten anderen Informationskategorie voraussetzen können. Zum anderen können einige Informationskategorien das Vorhandensein einer bestimmten anderen Informationskategorie voraussetzen. Weiterhin kann dies bedeuten, dass bestimmte Informationskategorien nur einmal pro Zeichenabfolge vorkommen können.

Bei einigen Ausführungsbeispielen ist das Zuordnungsmodul 102 ferner dazu ausgebildet, der Zeichengruppe die erste Informationskategorie nur dann zuzuordnen, wenn die Zeichengruppe ein Anfangszeichen der Zeichenabfolge einschließt oder ein Endzeichen der Zeichenabfolge ausschließt. Anders ausgedrückt können einige Informationskategorien lediglich an erster Stelle oder zumindest nicht an letzter Stelle der Zeichenabfolge auftreten.

Nochmals mit anderen Worten erklärt können bei der Zuordnung einer Informationskategorie zu einer Zeichengruppe die Position der Zeichengruppe in der Zeichenabfolge oder weiteren Zeichengruppen zugeordnete Informationskategorien einen Einfluss haben. Es folgen hierzu einige konkrete Regelbeispiele für eine Möglichkeitsanalyse.

Beispielsweise können zu Beginn der Zeichenabfolge lediglich die Informationskategorien "Stadt", "Straße", "Postleitzahl", "Hausnummer" und der INNENSTADT-Operator stehen. Wenn die Zeichenabfolge mehr als eine Zeichengruppe hat, können auch "Staat" und "Land" an erster Stelle stehen.

Beispielsweise kann es nur maximal einen UND-Operator pro Zeichenabfolge geben, der "Straße"-Zeichengruppen von "Kreuzung"-Zeichengruppen trennt. "Hausnummer"-Zeichengruppen und INNENSTADT-Operatoren können nicht in einem Ergebnis mit einem UND-Operator vorkommen. Ein UND-Operator kann nicht die letzte Zeichengruppe einer Zeichenabfolge sein.

Wenn es beispielsweise noch keinen IN-Operator im Ergebnis gibt, steht vor ihm kein NAHE-Operator, "Staat", "Land" oder INNENSTADT-Operator. Der erste IN-Operator steht dabei nach "Stadt", "Postleitzahl", "Straße" oder "Kreuzung". Ein IN-Operator kann nicht die letzte Zeichengruppe einer Zeichenabfolge sein.

Wenn es beispielsweise bereits genau einen IN-Operator im Ergebnis gibt, kann vor dem zweiten kein NAHE-Operator, "Staat", "Land" oder INNENSTADT-Operator stehen. Der zweite IN-Operator steht nach "Stadt" oder "Postleitzahl", und kann nicht die letzte Zeichengruppe einer Zeichenabfolge sein.

Beispielsweise können mehr als zwei IN-Operatoren nicht möglich sein.

Beispielsweise kann ein INNENSTADT-Operator nur als erste oder letzte Zeichengruppe einer Zeichenabfolge vorkommen, und vor ihm kann nur "Stadt", "Postleitzahl", "Staat" und "Land" vorkommen. Es kann nur höchstens einen INNENSTADT-Operator pro Ergebnis geben.

Beispielsweise können vor einem NAHE-Operator nur "Hausnummer", "Straße", UND-Operator oder "Kreuzung" vorkommen. Direkt vor einem NAHE-Operator steht eine "Straße" oder eine "Kreuzung". Es gibt nur höchstens einen NAHE-Operator pro Ergebnis. Ein NAHE-Operator kann nicht die letzte Zeichengruppe einer Zeichenabfolge sein.

Beispielsweise kann "Straße" nur am Anfang der Zeichenabfolge, hinter "Hausnummer" oder einer weiteren "Straße" stehen. "Straße" kann nicht zusammen mit einem INNENSTADT-Operator vorkommen.

Beispielsweise kann "Kreuzung" nur nach einem UND-Operator oder einer weiteren "Kreuzung" stehen. "Kreuzung" kann nicht zusammen mit einem INNENSTADT-Operator vorkommen.

Wenn es beispielsweise bisher noch keinen IN-Operator in der Zeichenabfolge gibt, kann eine "Stadt" nach NAHE-Operator, INNENSTADT-Operator, "Straße", "Kreuzung", "Postleitzahl", "Stadt", "Staat" oder "Land" stehen.

Wenn es beispielsweise bisher genau einen IN-Operator in der Zeichenabfolge gibt, ist "Stadt" nur erlaubt, wenn es vor diesem IN-Operator noch keine "Stadt"- oder "Postleitzahl"-Zeichengruppe gibt.

Wenn es beispielsweise bisher genau zwei IN-Operator in der Zeichenabfolge gibt, ist "Stadt" nicht möglich.

Wenn es beispielsweise bisher noch keinen IN-Operator in der Zeichenabfolge gibt, kann ein "Postleitzahl" nach NAHE-Operator, INNENSTADT-Operator, "Straße", "Kreuzung", "Stadt", "Staat" oder "Land" stehen.

Wenn es beispielsweise bisher genau einen IN-Operator in der Zeichenabfolge gibt, ist "Postleitzahl" nur erlaubt, wenn es vor diesem IN-Operator noch keine "Stadt"- oder "Postleitzahl"-Zeichengruppe gibt.

Wenn es beispielsweise bisher genau zwei IN-Operator in der Zeichenabfolge gibt, ist "Postleitzahl" nicht möglich.

Es kann beispielsweise nur höchstens eine "Postleitzahl"-Zeichengruppe in der Zeichenabfolge geben.

"Staat" kann beispielsweise nur nach IN-Operator, NAHE-Operator, "Straße", "Kreuzung", "Stadt", "Postleitzahl" oder "Land" erlaubt sein. Es kann nur maximal einen "Staat" pro Zeichenabfolge geben.

"Land" ist beispielsweise nur nach IN-Operator, NAHE-Operator, "Straße", "Kreuzung", "Stadt", "Postleitzahl" oder "Staat" erlaubt. Es darf nur maximal ein "Land" pro Zeichenabfolge geben.

"Staat" und "Land" kann beispielsweise nur erlaubt sein, wenn es wenigstens eine "Straße"-, "Stadt"- oder "Postleitzahl"-Zeichengruppe gibt.

"Hausnummer" kann beispielsweise nur als erste Zeichengruppe und nicht in Verbindung mit einem INNENSTADT-Operator erlaubt sein.

Auf den möglichen Ergebnissen kann die Wahrscheinlichkeitsanalyse durchgeführt werden, durch die das Ergebnis in seiner Wahrscheinlichkeit bewertet werden kann. Dazu kann in jeder Zeichengruppe eine "Unwahrscheinlich"-Markierung gesetzt werden, um anzuzeigen, dass die zugeordnete Informationskategorie unwahrscheinlich ist. Alternativ kann auch eine Kombination mit einem Gewicht von 0 versehen werden, was das gesamte Ergebnis (die gesamte Interpretation der Zeichenabfolge) unmöglich machen kann. Außerdem können Zeichengruppen als Complete Matches markiert werden (z.B. "la" für "Los Angeles CA USA"). Eine Regel kann Listen von Abkürzungen oder Namen für Staaten ("CA=California", "TX=Texas", "FL=Florida" etc.), Länder ("CAN=Canada", "MEX=Mexico" etc.), Straßen-Präfixe ("W=West", "N=North", "SE=Southeast" etc.) und Straßen-Anhängsel ("ave=Avenue", "blvd=Boulevard", "st=Street", "rd=Road" etc.) verwalten, um die Analyse zu erleichtern.

Wie in Fig. 3 bereits angedeutet ist, ist bei einigen Ausführungsbeispielen das Überprüfungsmodul 108 ferner dazu ausgebildet, den Wahrscheinlichkeitswert für die Richtigkeit der Zuordnung der Zeichengruppe basierend auf einer Anzahl, einer Art oder einer Identität eines oder mehrerer Zeichen der Zeichengruppe zu bestimmen. Die Art kann sich z. B. auf die Gruppen "Buchstabe", "Ziffer" oder "Sonderzeichen" beziehen. Somit kann es möglich sein, Formate wie z. B. 5-stellige Postleitzahlen oder eine Mindestlänge für eine bestimmte Informationskategorie für die Wahrscheinlichkeitsanalyse zu berücksichtigen. Die Identität eines oder mehrerer Zeichen kann bedeuten, dass z. B. nur bestimmte Wörter für eine Informationskategorie zulässig sind, beispielsweise das Wort "in" für den IN-Operator.

Bei manchen Ausführungsbeispielen ist das Überprüfungsmodul 108 ferner dazu ausgebildet, den Wahrscheinlichkeitswert für die Richtigkeit der Zuordnung der weiteren Zeichengruppe unter Berücksichtigung der der ersten Zeichengruppe zugeordneten ersten Informationskategorie zu bestimmen. Somit können z. B. Informationskategorien eines bestimmten Typs unwahrscheinlicher werden, je öfter sie auftreten. Oder die Wahrscheinlichkeit kann sich auch daraus ergeben, welche Art von Informationskategorie außerdem in der Zeichenabfolge vorhanden ist.

Bei einigen Ausführungsbeispielen ist das Überprüfungsmodul ferner dazu ausgebildet, den Wahrscheinlichkeitswert für die Richtigkeit der Zuordnung der weiteren Zeichengruppe unter Berücksichtigung einer relativen Position der Zeichengruppe zu der weiteren Zeichengruppe innerhalb der Zeichenabfolge und der Informationskategorie und der weiteren Informationskategorie zu bestimmen. Der Wahrscheinlichkeitswert kann beispielsweise davon abhängen, ob die weitere Zeichengruppe und die Zeichengruppe unmittelbar benachbart sind. "Unmittelbar benachbart" kann bedeuten, dass zwischen zwei betroffenen Objekten kein weiteres Objekt derselben Art befindlich ist. So kann z. B. eine Reihenfolge berücksichtigt werden, nach der beispielsweise ein Straßenname vor einem Straßensuffix oder nach einem Straßenpräfix kommt. Es folgen wiederum einige konkrete Regelbeispiele für die Wahrscheinlichkeitsanalyse.

Beispielsweise können "Staat"-Zeichengruppen unmöglich sein, wenn sie nicht dem Namen oder der Abkürzung in einer Street-Abbreviation entsprechen.

Beispielsweise können "Land"-Zeichengruppen unmöglich sein, wenn sie nicht dem Namen oder der Abkürzung in einer Country-Abbreviation entsprechen.

Beispielsweise können IN-Operator-Zeichengruppen unmöglich sein, wenn sie nicht einer Eingabe (String) für einen In-Operator entsprechen (z. B. das Wort "in").

Beispielsweise können NAHE-Operator-Zeichengruppen unmöglich sein, wenn sie nicht einer Eingabe für einen NAHE-Operator entsprechen (z. B. die Wörter "near" (nahe bei) und "around" (in der Umgebung von)).

Beispielsweise können UND-Operator-Zeichengruppen unmöglich sein, wenn sie nicht einer Eingabe für einen UND-Operator entsprechen ("and", "@", "&", "+", "xts").

Beispielsweise können INNENSTADT-Operator-Zeichengruppen unmöglich sein, wenn sie nicht einer Eingabe für einen INNENSTADT-Operator entsprechen (das Wort "downtown").

Beispielsweise können "Postleitzahl"-Zeichengruppen unmöglich sein, wenn sie nicht ein Format haben, das eine Postleitzahl sein könnte (fünfstellige Zahlen und das Format für kanadische "Forward Sortation Area").

Beispielsweise können "Hausnummer"-Zeichengruppen unmöglich sein, wenn sie nicht ein Format haben, das eine Hausnummer sein könnte (numerische und alphanumerische Hausnummern mit einem Buchstaben als Suffix, z.B. "500", "500a", "500 ½", "500-1001").

Beispielsweise kann "Straße" vor einem "Straßen-Präfix" und hinter einem "Straßen-Suffix" als unwahrscheinlich markiert werden.

Beispielsweise kann "Stadt" als unwahrscheinlich markiert werden, wenn die Zeichengruppe ein "Straßen-Präfix" oder ein "Straßen-Suffix" ist, unmittelbar vor einem "Straßen-Suffix" oder unmittelbar nach einem "Straßen-Präfix" oder irgendwo zwischen einem "Straßen-Präfix" und einem "Straßen-Suffix" steht.

Beispielsweise können "Straße" und "Stadt" unwahrscheinlich sein, wenn eine Zeichengruppe auch eine Hausnummer sein könnte.

Beispielsweise können "Straße", "Stadt" und "Kreuzung" unmöglich sein, wenn die Zeichengruppe auch eine "Postleitzahl" sein könnte.

Beispielsweise können "Straße" und "Stadt" unwahrscheinlich sein, wenn die Zeichengruppe auch ein INNENSTADT-Operator sein könnte.

Beispielsweise können "Straße" und "Stadt" unmöglich sein, wenn die Zeichengruppe ein forcierter UND-Operator ist ("@", "&", "+", "xts").

Ein ausgeschriebener "Staat" ("california" statt "ca") kann beispielsweise unwahrscheinlich sein.

Ein ausgeschriebenes "Land" ("mexico" statt "mex") kann beispielsweise unwahrscheinlich sein.

Eine "Straße"- oder "Kreuzung"-Zeichengruppe mit ausgeschriebenes "Straßen-Präfix" ("first" statt "1st") kann beispielsweise unwahrscheinlich sein.

Eine "Straße"- oder "Kreuzung"-Zeichengruppe mit ausgeschriebenem "Straßen-Suffix" ("street" statt "st") kann beispielsweise unwahrscheinlich sein.

Eine "Stadt"-Zeichengruppe, das zu einer ganz bestimmten Stadt zugeordnet ist (z.B. "Ia" oder "sf"), kann beispielsweise als wahrscheinlich (Complete Match) markiert werden.

Wenn ein Ergebnis nur ein "Stadt"-Zeichengruppe, aber kein "Staat" oder "Land" besitzt, und das "Stadt"-Zeichengruppe kürzer als drei Buchstaben ist, kann die Zuordnung als "Stadt"-Zeichengruppe beispielsweise als unwahrscheinlich markiert werden.

Wenn ein Ergebnis maximal zwei Zeichengruppen besitzt, die alle "Stadt"-Zeichengruppen sind, können beispielsweise alle "Stadt"-Zeichengruppen unwahrscheinlich sein.

Wenn beispielsweise ein Ergebnis mehr als drei "Straße"-Zeichengruppen besitzt, können alle "Straße"-Zeichengruppen über das dritte hinaus unwahrscheinlich sein.

Wenn beispielsweise ein Ergebnis mehr als drei "Kreuzung"-Zeichengruppen besitzt, können alle "Kreuzung" -Zeichengruppen über das dritte hinaus unwahrscheinlich sein.

Wenn beispielsweise ein Ergebnis eine "Staat"- oder "Land"-Zeichengruppe enthält, aber keine weiteren Stadteingrenzenden Zeichengruppen (Stadt" oder "Postleitzahl"), kann die Zeichengruppe unwahrscheinlich sein.

Nachdem die Möglichkeits- und die Wahrscheinlichkeitsanalyse abgeschlossen sind, können die verbleibenden, bzw. möglichen, Ergebnisse sortiert werden. Dabei können die folgenden, beispielhaften Regeln verwendet werden.

Ergebnisse mit weniger Unwahrscheinlich-Markierungen können vor Ergebnissen mit mehr Unwahrscheinlich-Markierungen einsortiert werden.

Ergebnisse mit mehr Complete Matches können vor Ergebnissen mit weniger Complete Matches einsortiert werden.

Bei nur einer Zeichengruppe können "Postleitzahlen" vor "Hausnummern" einsortiert werden.

Ergebnisse mit mehr Operatoren (UND, IN und NAHE) können vor Ergebnissen mit weniger Operatoren einsortiert werden.

Ergebnisse mit "Stadt"- oder "Postleitzahl"-Zeichengruppen können vor Ergebnissen einsortiert werden, die zwar "Staat" und "Land", aber keine "Stadt"- oder "Postleitzahl"-Zeichengruppe haben.

Bei unterschiedlicher Anzahl von stadteingrenzenden Zeichengruppen ("Stadt"-, "Postleitzahl"-, "Staat"- und "Land"-Zeichengruppen) kann das Ergebnis, das mehr "Straße"-Zeichengruppen hat, weiter vorne einsortiert werden.

Bei gleicher Anzahl von stadteingrenzenden Zeichengruppen kann das Ergebnis mit mehr staateingrenzenden Zeichengruppen ("Staat"und "Land") weiter vorne einsortiert werden.

Bei gleicher Anzahl von staateingrenzenden Zeichengruppen kann das Ergebnis weiter vorne einsortiert werden, dessen Summe auf "Stadt"-Zeichengruppen ("Stadt"- und "Postleitzahl"-Zeichengruppen) höher ist.

Bei gleicher Anzahl von Stadt-Zeichengruppen kann das Ergebnis mit mehr "Straße"-Zeichengruppen weiter vorne einsortiert werden.

Der oben bereits genannte dritte Teilaspekt von Ausführungsbeispielen neben der Datenbanktabelle und der Zeichengruppenanalyse kann die Suchstrategie sein. Durch die Suchstrategie wird angestrebt, die Ergebnisse der Zeichengruppenanalyse in Anfragen an die Datenbanktabelle und die restliche NDS-Datenbank umzusetzen, ggf. nachzubearbeiten und zusammenzufassen, oder auch mit Ergebnissen aus anderen Quellen zu verbinden und die Ergebnisse zu veröffentlichen. Die Suchstrategie kann dabei z. B. auf die nordamerikanische Region ausgelegt sein, aber optional auch an andere Regionen angepasst werden.

Ähnlich wie die Regeln der Zeichengruppenanalyse kann die Suchstrategie von eingesetzter Kultur oder Sprache abhängig sein. Anhand des Beispiels einer Suchstrategie für Nordamerika können folgende Regeln implementiert sein:
Die Ergebnisse aus dem Verlauf können vor den Ergebnissen aus der eigentlichen Suche auf der Basis der Zeichengruppenanalyse veröffentlicht werden.

Die Zeichenabfolge kann vor der Übergabe an die Zeichengruppenanalyse normalisiert werden. Dies kann z. B. bedeuten, Leerzeichen vor und nach der Zeichenabfolge zu entfernen, mehrere Leerzeichen zwischen Zeichengruppen zu einem einzigen zusammenzufassen, unnötige Interpunktionszeichen zu entfernen oder die Zeichenabfolge komplett in Kleinbuchstaben umzuwandeln. Diese Maßnahme kann eine Weiterverarbeitung erleichtern.

Die Ergebnisse der Zeichengruppenanalyse können in der vorgegebenen Reihenfolge abgearbeitet werden.

Wenn das zu bearbeitende Ergebnis der Analyse keine stadteingrenzenden Zeichengruppen ("Stadt", "Postleitzahl", "Staat", "Land") enthält, kann eine Umkreissuche durchgeführt werden. Dazu können über die Datenbanktabelle die um die aktuelle Fahrzeugposition liegenden Städte nach der eingegebenen Adresse durchsucht werden. Enthält das Ergebnis stadteingrenzende Zeichengruppen, können diese genutzt werden, um die dazu passenden Städte aus der Datenbanktabelle zu laden und in diesen die eingegebene Adresse zu suchen.

Ergebnisse, die zu einer Zeichengruppe mit voller Übereinstimmung passen, können solchen mit einer teilweisen Übereinstimmung vorgezogen, also zuerst veröffentlicht werden. Die Zeichengruppe "clip" ist z.B. eine voller Übereinstimmung für die Straße "Clip Dr", aber nur eine teilweise Übereinstimmung für die Straße "Clipper Dr".

Wenn es zu einer Stadtsuche oder einer Straßensuche innerhalb derselben Stadt mehrere Ergebnisse gibt, dann können die Ergebnisse nach der Übereinstimmungsqualität sortiert werden. Dabei kann berücksichtigt werden, ob die Ergebnisse für die Zeichengruppe volle oder teilweise Übereinstimmungen sind, ob alle Worte im Ergebnis auch mit einer Zeichengruppe angesprochen wurden und ob die Zeichengruppen in derselben Reihenfolge in der Zeichenabfolge stehen wie im Ergebnis. Ist die Übereinstimmungsqualität gleich, können die Ergebnisse bei einer Stadtsuche aufsteigend nach der Entfernung zur Fahrzeugposition sortiert veröffentlicht werden.

Sollte bei einer Umkreissuche eine Stadt behandelt werden, die zufällig auch ein passendes Ergebnis zu der Zeichenabfolge ist, kann die Stadt auch veröffentlicht werden. Dadurch kann mit einem Analyse-Ergebnis, das zuerst als Straße interpretiert wird, "unterwegs" während der Umkreissuche auch eine Stadt in der Nähe gefunden werden.

Wenn eine Hausnummer in einer Straße nicht gefunden wurde, kann sie trotzdem veröffentlicht werden, aber mit einer Markierung, dass die Hausnummer nicht existiert. Dadurch kann trotz einer falschen Hausnummer das Ergebnis trotzdem näherungsweise zur Routenberechnung verwendet werden.

Postleitzahlen von Ergebnissen können nur dann veröffentlicht werden, wenn sie für den User einen Mehrwert darstellen. Das kann dann der Fall sein, wenn er sie eingegeben hat oder wenn sie zur Unterscheidung gleichnamiger Straßen in derselben Stadt dienen können.

Wenn eine Adresse mehrere, anzuzeigende Postleitzahlen hat (z.B. bei sehr langen Straßen), kann die Liste aus Postleitzahlen aufsteigend sortiert und im Format "von (niedrigster Zahl) bis (höchster Zahl)" veröffentlicht werden. Das kann ggf. unnötige Platzverschwendung auf einem Display vermeiden.

Nachdem alle Ergebnisse der Zeichengruppenanalyse abgearbeitet sind, kann noch, wo sinnvoll, eine unscharfe Suche durchgeführt werden. Dabei können Zeichengruppen, die Städte eingrenzen ("Stadt", "Postleitzahl", "Staat", "Land"), unscharf betrachtet werden, indem in den in einem Umkreis um die passenden Städte herum zu findenden Städten die weiterführenden Suchen ("Straße", "Hausnummer", "Kreuzung") durchgeführt werden. Auf diese Art und Weise kann es möglich sein, z.B. eine Straße in einem Nachbarort zu finden, obwohl der Benutzer eigentlich eine falsche Stadt eingegeben hat.

Im Weiteren werden nun einige Ausführungsbeispiele anhand konkreter Anwendungen näher beschrieben. Die Konzepte und die verwendeten Regeln für die Analyse der Zeichengruppen der Zeichenabfolge (Token-Entity-Analyse), auf denen die Ausführungsbeispiele beruhen, entsprechen den zuvor Beschriebenen.

Anhand eines ersten Ausführungsbeispiels werden die Umkreissuche, die stadteingrenzende Suche auf der Basis der gespeicherten Datenbank, und der Einsatz der Analyse der Zeichengruppen nochmals detailliert erläutert. Ein Benutzer steht in seinem Fahrzeug im Clipper Drive, Belmont, CA (Kalifornien), USA auf der Straße vor der Hausnummer 500 (Längengrad: -122.271699, Breitengrad: 37.533058). Er möchte zur Arlington Road, Redwood City, CA, USA zur Hausnummer 611. Dazu gibt er in ein mit der Vorrichtung gekoppeltes Eingabegerät als einzeilige Zieleingabe "611 Arlington Rd" ein.

Die Zeichengruppenanalyse kann gemäß den zuvor beschriebenen Regeln erfolgen und zu einem Ergebnis kommen, welches mehrere mögliche Interpretationen umfasst:
Eine erste Interpretation lautet "Hausnummer(611) Straße(arlington) Straße(rd)".
Eine zweite Interpretation lautet "Hausnummer(611) Straße(arlington) -Stadt(rd)".
Eine dritte Interpretation lautet "-Straße(611) Straße(arlington) Straße(rd)".
Eine vierte Interpretation lautet "-Straße(611) Straße(arlington) -Stadt(rd)".
Eine fünfte Interpretation lautet "-Straße(611) -Stadt(arlington) -Stadt(rd)".
Eine sechste Interpretation lautet "-Stadt(611) -Stadt(arlington) -Stadt(rd)".

Die Suchstrategie kann jetzt nacheinander Suchen entsprechend der Ergebnisse der Zeichengruppenanalyse durchführen, in der hier aufgeführten Reihenfolge.

Da das Analyseergebnis gemäß der ersten Interpretation "Hausnummer(611) Straße(arlington) Straße(rd)" keine stadteingrenzende Zeichengruppe enthält, kann eine Umkreissuche gestartet werden. Die Suchstrategie kann dafür aus der Datenbanktabelle (City Index) Städte im Umkreis von 150km um die aktuelle Fahrzeugposition, aufsteigend sortiert nach Entfernung zur Fahrzeugposition ermitteln. Diese Städte umfassen beispielsweise Belmont, San Carlos, San Mateo, Redwood City und 245 weitere Städte. Nun kann in jeder der 249 Städte nacheinander nach einer "Arlington Rd" gesucht werden. In Belmont, San Carlos und San Mateo gibt es eine solche Straße nicht, in Redwood City wird sie gefunden. In dieser Straße kann dann nach der Hausnummer 611 gesucht werden, die ebenfalls gefunden wird. Da nun alle Zeichengruppen verwendet wurden, ist ein sinnvolles Ergebnis gefunden und kann veröffentlicht werden. Damit ist das intendierte Ergebnis gefunden. Die Umkreissuche kann mit den restlichen 245 Städten fortgesetzt werden, wobei sich passende Adressen Livermoore, Concord, Stockton, Hollister und WestScramento finden lassen und ebenfalls veröffentlicht werden können.

Da das Analyseergebnis gemäß der zweiten Interpretation "Hausnummer(611) Straße(arlington) -Stadt(rd)" eine stadteingrenzende Zeichengruppe enthält, kann die Suchstrategie versuchen, mit Hilfe der Datenbanktabelle alle Städte, die auf "rd" passen, zu ermitteln. Das sind 5 Stadtteile in Mexico. Diese Städte können nach Straßen mit "arlington" durchsucht werden, wobei aber keine passenden Ergebnisse gefunden werden. Da somit noch Zeichengruppen ohne eine Übereinstimmung bleiben, produziert diese Interpretation der Zeichenabfolge keine sinnvollen Ergebnisse.

Da das Analyseergebnis gemäß der dritten Interpretation "-Straße(611) Straße(arlington) Straße(rd)" wieder keine stadteingrenzende Zeichengruppe enthält, kann wieder eine Umkreissuche gestartet werden. Die 249 Städte können nach Straßen durchsucht werden, deren Name auf "611 arlington rd" passt. Da es solche Straßen in diesen Städten nicht gibt, bleibt diese Interpretation der Zeichenabfolge ergebnislos.

Bei der vierten Interpretation "-Straße(611) Straße(arlington) -Stadt(rd)" gibt es wieder stadteingrenzende Zeichengruppen. Erneut können alle Städte, die auf "rd" passen, mit Hilfe der Datenbanktabelle ermittelt werden. Die besagten 5 Stadtteile in Mexico können dann nach Straßen, die auf "611 arlington" passen, durchsucht werden. Diese Suchen bleiben erfolgslos, weswegen diese Interpretation keine sinnvollen Ergebnisse hervorbringt.

Bei der fünften Interpretation "-Straße(611) -Stadt(arlington) -Stadt(rd)" kann die Strategie auf der Basis der stadteingrenzenden Zeichengruppen mit Hilfe der Datenbanktabelle nach Städten suchen, die auf "arlington rd" passen. Solche Städte gibt es in Nordamerika nicht, deswegen bleibt diese Interpretation der Zeichenabfolge ergebnislos.

Bei der sechsten Interpretation "-Stadt(611) -Stadt(arlington) -Stadt(rd)" kann die Strategie auf der Basis der stadteingrenzenden Zeichengruppen mit Hilfe der Datenbanktabelle nach Städten suchen, die auf "611 arlington rd" passen. Solche Städte gibt es in Nordamerika nicht, deswegen bleibt diese Interpretation der Zeichenabfolge ergebnislos.

Ein zweites Ausführungsbeispiel hat eine ähnliche Grundprämisse wie das vorangegangene Ausführungsbeispiel, nur gibt der Benutzer die gewünschte Adresse anders ein und spezifiziert keine Hausnummer. Anhand dessen kann der Einfluss der Benutzereingabe auf die Zeichengruppenanalyse und damit auf die Wartezeit bis zum gewünschten Ergebnis demonstriert werden.

Der Benutzer steht in seinem Fahrzeug im Clipper Drive, Belmont, CA, USA auf der Straße vor der Hausnummer 500 (Längengrad: -122.271699, Breitengrad: 37.533058). Er möchte zur Arlington Road, Redwood City, CA. Dazu gibt es in die einzeilige Zieleingabe "arlington redwood" ein.

Die Zeichengruppenanalyse kann gemäß den zuvor beschriebenen Regeln erfolgen und zu einem Ergebnis kommen, welches mehrere mögliche Interpretationen umfasst:
Eine erste Interpretation lautet "Straße(arlington) Straße(redwood)".
Eine zweite Interpretation lautet "Straße(arlington) Stadt(redwood)".
Eine dritte Interpretation lautet "Stadt(arlington) Stadt(redwood)".

Die Suchstrategie kann die Analyseergebnisse nun in der vorgegebenen Reihenfolge bearbeiten.

Da das Analyseergebnis gemäß der ersten Interpretation "Straße(arlington) Straße(redwood)" keine stadteingrenzenden Zeichengruppen enthält, kann eine Umkreissuche gestartet werden. Die Strategie kann mit Hilfe des CityIndex alle Städte im Umkreis von 150 Kilometern um die Fahrzeugposition ermitteln, aufsteigend sortiert nach Entfernung zur Fahrzeugposition. Das sind beispielsweise 249 Städte. Diese können nacheinander nach Straßen durchsucht werden, die auf "arlington redwood" passen. Solche Straßen gibt es nicht, deswegen verläuft die Suche nach dieser Interpretation der Zeichenabfolge ergebnislos.

In der zweiten Interpretation "Straße(arlington) Stadt(redwood)" kann die Strategie mit Hilfe der Datenbanktabelle alle Städte ermitteln, die auf "redwood" passen, aufsteigend sortiert nach Entfernung zur Fahrzeugposition. Das sind z. B. 6 Städte in den USA und Kanada. Diese Städte können nun nach Straßen, die auf "arlington" passen, durchsucht werden. Damit kann die Arlington Rd in Redwood City, CA, USA gefunden und als Ergebnis veröffentlicht werden. Die anderen Städte enthalten keine passenden Straßen.

Bei der Durchführung der dritten Interpretation "Stadt(arlington) Stadt(redwood)" kann die Strategie mit Hilfe der Datenbanktabelle nach Städten suchen, die auf "arlington redwood" passen. Solche Städte gibt es in Nordamerika nicht, deswegen verläuft die Suche nach dieser Interpretation ergebnislos.

Da die Zeichengruppenanalyse unter Umständen keine Anhaltspunkte hat, Straßen- und Stadt-Zeichengruppen zu unterscheiden, aber davon ausgehen kann, das nur relativ selten Stadt-Zeichengruppen eingegeben werden, weil beispielsweise die meisten Fahrten innerhalb eines Umkreises von 150 Kilometern stattfinden, kann sie Straßen- gegenüber Stadt-Zeichengruppen bevorzugen. Das kann bei einem Fall, bei dem der Benutzer tatsächlich die Stadt angegeben hat, dazu führen, dass das Ergebnis trotzdem mit Hilfe der zweiten Interpretation gefunden werden kann, und somit ggf. lediglich später als idealerweise möglich gewesen wäre.

Ein drittes Ausführungsbeispiel hat eine ähnliche Grundprämisse wie das zweite Ausführungsbeispiel, nur gibt der Benutzer die gewünschte Adresse anders ein. Anhand dessen kann ein Einfluss der Benutzereingabe auf die Zeichengruppenanalyse, und damit auf die Wartezeit bis zum gewünschten Ergebnis, demonstriert werden.

Der Benutzer steht in seinem Fahrzeug im Clipper Drive, Belmont, CA, USA auf der Straße vor der Hausnummer 500 (Längengrad: -122.271699, Breitengrad: 37.533058). Er möchte zur Arlington Road, Redwood City, CA. Dazu gibt es in die einzeilige Zieleingabe "arlington rd redwood" ein.

Die Zeichengruppenanalyse kann gemäß den zuvor beschriebenen Regeln erfolgen und zu einem Ergebnis kommen, welches mehrere mögliche Interpretationen umfasst:
Eine erste Interpretation lautet "Straße(arlington) Straße(rd) Stadt(redwood)".
Eine zweite Interpretation lautet "Straße(arlington) Straße(rd) -Straße(redwood)".
Eine dritte Interpretation lautet "Straße(arlington) -Stadt(rd) Stadt(redwood)".
Eine vierte Interpretation lautet "-Stadt(arlington) -Stadt(rd) Stadt(redwood)".

Die Suchstrategie kann jetzt nacheinander Suchen entsprechend der Ergebnisse der Zeichengruppenanalyse durchführen, in der hier aufgeführten Reihenfolge.

Da stadteingrenzende Zeichengruppen im Analyseergebnis gemäß der ersten Interpretation "Straße(arlington) Straße(rd) Stadt(redwood)" vorhanden sind, kann die Suchstrategie mit Hilfe der Datenbanktabelle alle Städte, die auf "redwood" passen, aufsteigend sortiert nach der Entfernung zur Fahrzeugposition suchen. Das sind beispielsweise in Nordamerika 6 Städte. Diese können nacheinander nach Straßen durchsucht werden, die auf "arlington rd" passen. Eine solche Straße wird nur in Redwood City, CA, USA gefunden und veröffentlicht. Damit ist das intendierte Ergebnis gefunden.

Da die zweite Interpretation "Straße(arlington) Straße(rd) -Straße(redwood)" keine stadteingrenzende Zeichengruppe enthält, kann eine Umkreissuche gestartet werden. Dazu ermittelt die Strategie mit Hilfe der Datenbanktabelle alle Städte im Umkreis von z. B. 150 Kilometern um die Fahrzeugposition, aufsteigend sortiert nach Entfernung zur Fahrzeugposition. Diese können nacheinander nach Straßen durchsucht werden, die auf "arlington rd redwood" passen. Da solche Straßen in diesen Städten nicht existieren, bleibt die Suche nach dieser Interpretation der Zeichenabfolge ergebnislos.

Bei der Durchführung der dritten Interpretation "Straße(arlington) -Stadt(rd) Stadt(redwood)" kann die Strategie mit Hilfe der Datenbanktabelle nach Städten suchen, die auf "rd redwood" passen. Solche Städte gibt es in Nordamerika nicht, deswegen verläuft die Suche nach dieser Interpretation ergebnislos.

Bei der Durchführung der vierten Interpretation "-Stadt(arlington) -Stadt(rd) Stadt(redwood)" kann die Strategie mit Hilfe der Datenbanktabelle nach Städten suchen, die auf "arlington rd redwood" passen. Solche Städte gibt es in Nordamerika nicht, deswegen verläuft die Suche nach dieser Interpretation ergebnislos.

Durch die Verwendung des Kürzels "rd", das von der Zeichengruppenanalyse primär als potentiell letzte Zeichengruppe einer Straße interpretiert werden kann, kann der Benutzer die Erkennung seiner Intention ermöglichen. Deswegen ist, anders als im Beispiel 2, die erste Interpretation bereits diejenige, die das gewünschte Ergebnis hervorbringt.

Anhand eines vierten Ausführungsbeispiels kann die Suche nach Kreuzungen verdeutlicht werden. Der Benutzer steht in seinem Fahrzeug im Clipper Drive, Belmont, CA, USA auf der Straße vor der Hausnummer 500 (Längengrad: -122.271699, Breitengrad: 37.533058). Er möchte zur Kreuzung zwischen der Bettina Ave und der Thurm Ave in derselben Stadt. Dazu gibt er in die einzeilige Zieleingabe "bettina and thurm" ein.

Die Zeichengruppenanalyse kann gemäß den zuvor beschriebenen Regeln erfolgen und zu einem Ergebnis kommen, welches mehrere mögliche Interpretationen umfasst:
Eine erste Interpretation lautet "Straße(bettina) UND-Operator(and) Kreuzung(thurm)".
Eine zweite Interpretation lautet "Straße(bettina) Straße(and) Straße(thurm)".
Eine dritte Interpretation lautet "Straße(bettina) Straße(and) Stadt(thurm)".
Eine vierte Interpretation lautet "Straße(bettina) Stadt(and) Stadt(thurm)".
Eine fünfte Interpretation lautet "Stadt(bettina) Stadt(and) Stadt(thurm)".

Die Suchstrategie kann jetzt nacheinander Suchen entsprechend der Ergebnisse der Zeichengruppenanalyse durchführen, in der hier aufgeführten Reihenfolge.

Da es keine stadteingrenzenden Zeichengruppen in der ersten Interpretation "Straße(bettina) UND-Operator(and) Kreuzung(thurm)" gibt, kann eine Umkreissuche gestartet werden. Dazu kann die Strategie mit Hilfe der Datenbanktabelle alle Städte im Umkreis von z. B. 150 Kilometern um die Fahrzeugposition, aufsteigend sortiert nach Entfernung zur Fahrzeugposition ermitteln. Diese Städte können nacheinander nach Straßen durchsucht werden, die auf "bettina" passen. Werden solche Straßen gefunden, können sie nach Kreuzungen durchsucht werden, die auf "thurm" passen, da der UND-Operator signalisiert, dass nach einer Kreuzung gesucht wird. Eine solche Kreuzung findet sich in Belmont, und sie kann als sinnvolles Ergebnis veröffentlicht werden. In allen anderen Städten im Umkreis findet sich eine solche Kreuzung nicht.

Da es keine stadteingrenzenden Zeichengruppen in der zweiten Interpretation "Straße(bettina) Straße(and) Straße(thurm)" gibt, kann eine Umkreissuche gestartet werden. Dazu kann die Strategie mit Hilfe der Datenbanktabelle alle Städte im Umkreis von z. B. 150 Kilometern um die Fahrzeugposition, aufsteigend sortiert nach Entfernung zur Fahrzeugposition ermitteln. Diese Städte können nacheinander nach Straßen durchsucht werden, die auf "bettina and thurm" passen. Solche Straßen gibt es in keiner dieser Städte, deswegen verläuft die Suche nach dieser Interpretation der Zeichenabfolge ergebnislos.

Bei der dritten Interpretation "Straße(bettina) Straße(and) Stadt(thurm)" kann die Suchstrategie mit Hilfe der Datenbanktabelle alle Städte, die auf "thurm" passen, aufsteigend sortiert nach Entfernung zur Fahrzeugposition ermitteln. Das sind z. B. 10 Städte und Stadtteile in Nordamerika. Diese können nacheinander nach Straßen durchsucht werden, die auf "bettina and" passen. Da solche Straßen in diesen Städten nicht existieren, verläuft die Suche nach dieser Interpretation der Zeichenabfolge ergebnislos.

Bei der Bearbeitung des Analyseergebnisses gemäß der vierten Interpretation "Straße(bettina) Stadt(and) Stadt(thurm)" kann die Suchstrategie mit Hilfe der Datenbanktabelle alle Städte, die auf "and thurm" passen, ermitteln. Da solche Städte in Nordamerika nicht existieren, verläuft die Suche nach dieser Interpretation der Zeichenabfolge ergebnislos.

Bei der fünften Interpretation "Stadt(bettina) Stadt(and) Stadt(thurm)" kann die Suchstrategie mit Hilfe der Datenbanktabelle alle Städte, die auf "bettina and thurm" passen, ermitteln. Da solche Städte in Nordamerika nicht existieren, verläuft die Suche nach dieser Interpretation der Zeichenabfolge ergebnislos.

Anhand eines fünften Ausführungsbeispiels kann die Suche nach Städten verdeutlicht werden en. Der Benutzer steht in seinem Fahrzeug im Clipper Drive, Belmont, CA, USA auf der Straße vor der Hausnummer 500 (Längengrad: -122.271699, Breitengrad: 37.533058). Er möchte nach Miami, FL, USA. Dazu gibt es in die einzeilige Zieleingabe "miami fl" ein.

Die Zeichengruppenanalyse kann gemäß den zuvor beschriebenen Regeln erfolgen und zu einem Ergebnis kommen, welches mehrere mögliche Interpretationen umfasst:
Eine erste Interpretation lautet "Stadt(miami) Staat(fl)". Eine zweite Interpretation lautet "Straße(miami) Straße(fl)". Eine dritte Interpretation lautet "Straße(miami) Stadt(fl)". Eine vierte Interpretation lautet "Straße(miami) -Staat(fl)". Eine fünfte Interpretation lautet "-Stadt(miami) -Stadt(fl)".

Die Suchstrategie kann jetzt nacheinander Suchen entsprechend der Ergebnisse der Zeichengruppenanalyse durchführen, in der hier aufgeführten Reihenfolge.

Da stadteingrenzende Zeichengruppen in der ersten Interpretation "Stadt(miami) Staat(fl)" vorhanden sind, kann die Suchstrategie alle Städte ermittelt, die in Florida liegen, deren Staat also auf "fl" passt, und deren Name auf "miami" passt. Das sind z. B. 11 Städte und Stadtteile. Diese können vor der Veröffentlichung noch nach der Übereinstimmungsqualität sortiert werden. Darunter kann auch das gewünschte "Miami, FL, USA" aufgrund der besten Übereinstimmungsqualität als erstes Ergebnis veröffentlicht werden.

Bei der zweiten Interpretation "Straße(miami) Straße(fl)" kann aufgrund der fehlenden stadteingrenzenden Zeichengruppen eine Umkreissuche gestartet werden. Dazu kann die Strategie alle Städte im Umkreis von z. B. 150 Kilometern, aufsteigend nach Entfernung zur Fahrzeugposition ermitteln. Diese Städte können der Reihe nach nach Straßen durchsucht werden, deren Name auf "miami fl" passt. Da solche Straßen in diesen Städten nicht existieren, verläuft die Suche nach dieser Interpretation der Zeichenabfolge ergebnislos.

Bei der dritten Interpretation "Straße(miami) Stadt(fl)" kann die Strategie mit Hilfe der Datenbanktabelle nach Städten suchen, deren Name auf "fl" passt, aufsteigend sortiert nach Entfernung zur Fahrzeugposition. Diese können danach nach Straßen durchsucht werden, deren Name auf "miami" passt. Das sind z. B. 6 Straßen in den USA und Mexico. Diese werden als sinnvolle Ergebnisse veröffentlicht.

Bei der vierten Interpretation "Straße(miami) -Staat(fl)" kann die Strategie alle Städte ermitteln, die in Florida liegen, deren Staat also auf "fl" passt, aufsteigend nach Entfernung zur Fahrzeugposition. Diese können nacheinander nach Straßen durchsucht werden, deren Name auf "miami" passt. Das ist eine Vielzahl von Straßen, die alle als sinnvolle Ergebnisse veröffentlicht werden.

Bei der fünften Interpretation "-Stadt(miami) -Stadt(fl)" kann die Suchstrategie mit Hilfe der Datenbanktabelle alle Städte ermitteln, deren Name auf "miami fl" passen. Da solche Städte in Nordamerika nicht existieren, verläuft die Suche nach dieser Interpretation der Zeichenabfolge ergebnislos.

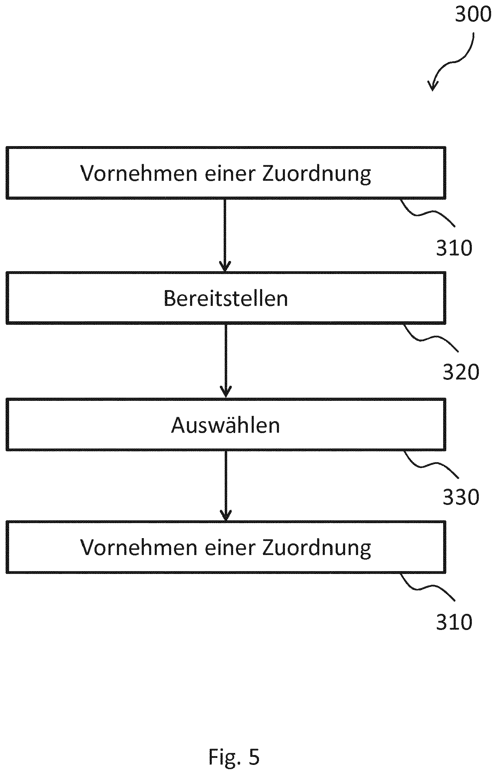

Fig. 5 zeigt ein Verfahren 300 zum Zuordnen eines Navigationsziels zu einer eine Mehrzahl von Zeichengruppen umfassenden Zeichenabfolge. Das Verfahren 300 umfasst ein Vornehmen 310 einer Zuordnung zumindest einer Zeichengruppe zu einer ersten Informationskategorie aus einer Mehrzahl von Informationskategorien für eine Interpretation der Zeichenabfolge. Das Verfahren 300 umfasst zudem ein Bereitstellen 310 jeweils einer Mehrzahl von einer Stadt eindeutig zugeordneten Merkmalen unterschiedlicher Informationskategorien für eine Mehrzahl von Städten. Das Verfahren 300 umfasst außerdem ein Auswählen 330 einer selektierten Stadt aus der Mehrzahl von Städten, wenn die Zeichengruppe einem der selektierten Stadt zugeordneten Merkmal der ersten Informationskategorie entspricht. Das Verfahren 300 umfasst weiterhin ein Vornehmen 340 einer Zuordnung weiterer Zeichengruppen aus der Zeichenabfolge zu der zweiten Informationskategorie bei einer selektierten Stadt, nur, wenn für die zweite Informationskategorie der Stadt ein der jeweiligen Zeichengruppe entsprechendes Merkmal zugeordnet ist.

Ausführungsbeispiele können es ermöglichen, eine globale Stadtliste nach Städten im Umkreis zu durchsuchen, diese nach Entfernung zur aktuellen Position zu sortieren und die Städte sequenziell abzuarbeiten, um auch trotz einer möglicherweise begrenzten Leistung einer Zielplattform in verkürzter Zeit erste und wahrscheinliche Ergebnisse zu liefern. Durch die Zeichengruppenanalyse der Zeichenabfolge können ggf. wahrscheinliche Lösungsvarianten höher priorisiert, und schnell wahrscheinliche Ergebnisse geliefert werden.

Ausführungsbeispiele können auf den Anwendungsfall in einem Fahrzeug und die Suche einer Adresse in selbigem optimiert werden. Ausführungsbeispiele können zudem die üblichen Eingabeverhalten von Menschen und die Tatsache berücksichtigen, dass man in einem Fahrzeug pro Fahrt üblicherweise nur bestimmte Entfernungen zurücklegt. Dabei kann ein Benutzer mit einem Fahrzeug an einer gegebenen Position sein und sich physikalisch an den gefundenen Ort bewegen wollen. Hingegen können konventionelle Lösungen darauf ausgerichtet sein, Adresse (und andere Ziele) gleichermaßen auf der ganzen Welt zu finden, weil das vornehmliche Ziel nicht gezwungenermaßen das physikalische Erreichen des gefundenen Zieles sein kann. Das kann es diesen Lösungen jedoch schwerer machen, Anwendungsfälle der Mobilität verbessert abzubilden. Weiterhin können Ausführungsbeispiele des Verfahrens oder der Vorrichtung potenziell auf weitere Anwendungsfälle der Adresseingabe anwendbar sein, bei denen man sich physikalisch von seiner aktuellen Position an eine gefundene Adresse bewegen möchte, also beispielsweise auch mit dem Fahrrad, zu Fuß, per Zug, Bus oder Bahn, oder auch als Anwendung auf einem mobilen Gerät.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Vorrichtung
- 102: Zuordnungsmodul
- 104: Speichermodul
- 106: Auswahlmodul
- 108: Überprüfungsmodul
- 110: Evaluierungsmodul
- 112: Sortiermodul
- 202: Programmstart
- 204: Eingabe
- 206: Analyse
- 208: Erster Kontrollschritt
- 210: Beenden des Programms
- 212: Suchstrategie
- 214: Zweiter Kontrollschritt
- 216: Abruf
- 218: Weiterer Abruf
- 220: Weitere Suche
- 222: Dritter Kontrollschritt
- 224: Veröffentlichung
- 300: Verfahren
- 310: Vornehmen (einer Zuordnung)
- 320: Bereitstellen
- 330: Auswählen
- 340: Vornehmen (einer Zuordnung)

## Patentansprüche

1. Vorrichtung (100) zum Zuordnen eines Navigationsziels zu einer eine Mehrzahl von Zeichengruppen umfassenden Zeichenabfolge, umfassend:
ein Zuordnungsmodul (102), welches dazu ausgebildet ist, für eine Interpretation der Zeichenabfolge eine Zuordnung zumindest einer Zeichengruppe zu einer ersten Informationskategorie aus einer Mehrzahl von Informationskategorien vorzunehmen;
ein Speichermodul (104), welches dazu ausgebildet ist, für eine Mehrzahl von Navigationszielen jeweils eine Mehrzahl von einem Navigationsziel eindeutig zugeordneten Merkmalen unterschiedlicher Informationskategorien bereitzustellen; und
ein Auswahlmodul (106), welches dazu ausgebildet ist, ein Navigationsziel aus der Mehrzahl von Navigationszielen auszuwählen, wenn die Zeichengruppe einem dem einen Navigationsziel zugeordneten Merkmal der ersten Informationskategorie entspricht,
wobei das Zuordnungsmodul (102) ferner dazu ausgebildet ist, bei dem einen Navigationsziel eine Zuordnung weiterer Zeichengruppen aus der Zeichenabfolge zu einer zweiten Informationskategorie nur vorzunehmen, wenn für die zweite Informationskategorie dem einen Navigationsziel ein der jeweiligen Zeichengruppe entsprechendes Merkmal zugeordnet ist, und
nur wenn das Auswahlmodul kein Navigationsziel aus der Mehrzahl von Navigationszielen auswählen kann, weil die Zeichengruppe keinem Merkmal der ersten Informationskategorie eindeutig entspricht, das Zuordnungsmodul (102) ferner dazu ausgebildet ist, eine Zuordnung einer weiteren Zeichengruppe zu der zweiten Informationskategorie vorzunehmen, wenn die weitere Zeichengruppe einem Merkmal entspricht, welches für die zweite Informationskategorie in dem Speichermodul (104) gespeichert ist und innerhalb einer vordefinierten Umgebung der Vorrichtung liegt.

2. Verfahren (300) zum Zuordnen eines Navigationsziels zu einer eine Mehrzahl von Zeichengruppen umfassenden Zeichenabfolge, umfassend:
ein Vornehmen (310) einer Zuordnung zumindest einer Zeichengruppe zu einer ersten Informationskategorie aus einer Mehrzahl von Informationskategorien für eine Interpretation der Zeichenabfolge;
ein Bereitstellen (320) jeweils einer Mehrzahl von einem Navigationsziel eindeutig zugeordneten Merkmalen unterschiedlicher Informationskategorien für eine Mehrzahl von Navigationszielen;
ein Auswählen (330) eines Navigationsziels aus der Mehrzahl von Navigationszielen,
wenn die Zeichengruppe einem dem einen Navigationsziel zugeordneten Merkmal der ersten Informationskategorie entspricht;
ein Vornehmen (340) einer Zuordnung weiterer Zeichengruppen aus der Zeichenabfolge zu einer zweiten Informationskategorie bei dem einen Navigationsziel, nur wenn für die zweite Informationskategorie dem einen Navigationsziel ein der jeweiligen Zeichengruppe entsprechendes Merkmal zugeordnet ist; und
nur wenn kein Navigationsziel aus der Mehrzahl von Navigationszielen ausgewählt werden kann, weil die Zeichengruppe keinem Merkmal der ersten Informationskategorie eindeutig entspricht, ein Vornehmen einer Zuordnung einer weiteren Zeichengruppe zu der zweiten Informationskategorie, wenn die weitere Zeichengruppe einem Merkmal entspricht, welches für die zweite Informationskategorie gespeichert ist und innerhalb einer vordefinierten Umgebung der Vorrichtung liegt.

3. Programm mit einem Programmcode zum Durchführen des Verfahrens gemäß Anspruch 2, wenn der Programmcode auf einem Computer, einem Prozessor oder einer programmierbaren Hardwarekomponente ausgeführt wird.

## Claims

1. A device (100) for the assignment of a navigation destination to a character sequence comprising a plurality of groups of characters, comprising:
An assignment module (102), which is configured to make an assignment at least of one group of characters to a first information category out of a plurality of information categories for an interpretation of the character sequence;
a memory module (104) which is configured to provide in each case a plurality of features of different information categories for a plurality of navigation destinations uniquely assigned to one navigation destination; and
a selection module (106), which is configured to select one navigation destination out of a plurality of navigation destinations, if the group of characters corresponds to a feature of the first information category assigned to the one navigation destination,
wherein the assignment module (102) is furthermore configured, in the one navigation destination to make only one assignment of further groups of characters from the character sequence to a second information category, if for the second information category one feature corresponding to the respective group of characters is assigned to the one navigation destination, and
only if the selection module cannot select any navigation destination from the plurality of navigation destinations, because the group of characters does not uniquely correspond to any feature of the first information category, the assignment module (102) furthermore is configured to make an assignment of a further group of characters to the second information category, if the further group of characters corresponds to a feature, which is stored for the second information category in the memory module (104) and is within a pre-defined environment of the device.

2. A method (300) for the assignment of a navigation destination to a character sequence comprising a plurality of groups of characters, comprising:
A making (310) of an assignment at least of one group of characters to a first information category out of a plurality of information categories for an interpretation of the character sequence;
a provision (320) in each case of a plurality of features of different information categories for a plurality of navigation destinations uniquely assigned to one navigation destination;
a selection (330) of one navigation destination out of a plurality of navigation destinations, if the group of characters corresponds to a feature of the first information category assigned to the one navigation destination;
a making (340) of an assignment of further groups of characters from a character sequence to a second information category in the one navigation destination, only if for the second information category one feature corresponding to the respective group of characters is assigned to the one navigation destination; and
only if no navigation destination can be selected from the plurality of navigation destinations, because the group of characters does not correspond uniquely to any feature of the first information category, a making of an assignment of a further group of characters to the second information category, if the further group of characters corresponds to a feature, which is stored for the second information category and is within a pre-defined environment of the device.

3. A program with a program code for carrying out the method according to Claim 2, if the program code is executed on a computer, a processor or a programmable hardware component.

## Revendications

1. Dispositif (100) destiné à l'attribution d'une destination de navigation à une série de caractères comprenant une pluralité de groupes de caractères, comprenant :
un module d'attribution (102), qui est constitué pour, en vue d'une interprétation de la série de caractères, effectuer une attribution d'au moins un groupe de caractères à une première catégorie d'informations issue d'une pluralité de catégories d'informations ;
un module de mémoire (104), qui est constitué pour, pour une pluralité de destinations de navigation, fournir respectivement une pluralité de caractéristiques de différentes catégories d'informations affectées sans ambiguïté à une destination de navigation ; et
un module de sélection (106) qui est constitué pour sélectionner une destination de navigation issue d'une pluralité de destinations de navigation quand le groupe de caractères correspond à une caractéristique de la première catégorie d'informations affectée à cette destination de navigation,
dans lequel le module d'attribution (102) est également constitué pour, dans le cas de cette destination de navigation, n'effectuer une attribution d'autres groupes de caractères, issus de la série de caractères, à une deuxième catégorie d'informations que quand, pour la deuxième catégorie d'informations, une caractéristique correspondant au groupe de caractères respectif est affectée à cette destination de navigation, et
seulement quand le module de sélection ne peut sélectionner aucune destination de navigation issue de la pluralité de destinations de navigation parce que le groupe de caractères ne correspond pas sans ambiguïté à aucune caractéristique de la première catégorie d'informations, le module d'attribution (102) est en outre constitué pour effectuer une attribution d'un autre groupe de caractères à la deuxième catégorie d'informations quand l'autre groupe de caractères correspond à une caractéristique qui est enregistrée pour la deuxième catégorie d'informations dans le module de mémoire (104) et est située à l'intérieur d'un environnement prédéfini du dispositif.

2. Procédé (300) destiné à l'attribution d'une destination de navigation à une série de caractères comprenant une pluralité de groupes de caractères, comprenant :
une réalisation (310) d'une attribution d'au moins un groupe de caractères à une première catégorie d'informations issue d'une pluralité de catégories d'informations pour une interprétation de la série de caractères ;
une fourniture (320) respectivement d'une pluralité de caractéristiques, attribuées sans ambiguïté à une destination de navigation, de différentes catégories d'informations pour une pluralité de destinations de navigation ;
une sélection (330) d'une destination de navigation issue d'une pluralité de destinations de navigation quand le groupe de caractères correspond à une caractéristique, affectée à cette destination de navigation, de la première catégorie d'informations ;
une réalisation (340) d'une attribution d'autres groupes de caractères issus de la série de caractères à une deuxième catégorie d'informations dans le cas de cette destination de navigation seulement quand, pour la deuxième catégorie d'informations, une caractéristique correspondant au groupe de caractères respectif est attribué à cette destination de navigation ; et
seulement quand aucune destination de navigation issue de la pluralité de destinations de navigation ne peut être sélectionnée parce que le groupe de caractères ne correspond pas sans ambiguïté à une caractéristique de la première catégorie d'informations, une réalisation d'une attribution d'un autre groupe de caractères à la deuxième catégorie d'informations quand l'autre groupe de caractères correspond à une caractéristique qui est enregistrée pour la deuxième catégorie d'informations et se trouve à l'intérieur d'un environnement prédéfini du dispositif.

3. Programme avec un code de programme pour la réalisation du procédé selon la revendication 2 quand le code de programme est exécuté sur un ordinateur, un processeur ou un composant matériel programmable.
